Europäisches Patentamt

European Patent Office

Office européen des brevets

(19)

(11) **EP 0 870 676 B1**

(12) **FASCICULE DE BREVET EUROPEEN**

(45) Date de publication et mention
de la délivrance du brevet:
**28.05.2003   Bulletin 2003/22**

(51) Int Cl.⁷: **B64C 27/605**

(21) Numéro de dépôt: **98400819.3**

(22) Date de dépôt: **06.04.1998**

(54) **Dispositif de commande individuelle des pales de rotors de voilures tournantes d'aéronefs avec plateaux cycliques multiples**

Individuelle Blattsteuerung für Drehflügelflugzeug mit mehreren Taumelscheiben

Individual blade control for rotorcraft with multiple swashplates

(84) Etats contractants désignés:
**DE FR GB IT**

(30) Priorité:  **08.04.1997  FR 9704279**

(43) Date de publication de la demande:
**14.10.1998   Bulletin 1998/42**

(73) Titulaire: **ONERA (Office National d'Etudes et de Recherches Aérospatiales)**
**92320 Châtillon (FR)**

(72) Inventeur: **Costes, Jean-Joel**
**92160 Antony (FR)**

(74) Mandataire: **Bérogin, Francis**
**Cabinet Plasseraud**
**84, rue d'Amsterdam**
**75440 Paris Cedex 09 (FR)**

(56) Documents cités:
**EP-A- 0 451 218          EP-A- 0 706 937**
**EP-A- 0 706 938          US-A- 3 448 810**
**US-A- 3 504 989**

**Description**

L'invention concerne un dispositif de commande individuelle des pales d'un rotor à au moins quatre pales, pour une voilure tournante d'aéronef, en particulier un rotor principal d'hélicoptère.

Bien que le dispositif de commande individuelle des pales selon l'invention ne soit pas limité, dans son application, aux rotors principaux d'hélicoptères, l'invention est décrite ci-dessous dans le cadre de cette application particulière, pour laquelle l'invention semble présenter le plus grand intérêt.

Le pas des pales d'un rotor principal d'hélicoptère est classiquement commandé par un dispositif à plateaux cycliques comprenant un ensemble de deux plateaux entourant le mât rotor. L'un est un plateau tournant, entraîné en rotation avec le rotor autour de l'axe de rotation de ce dernier. Ce plateau, relié à chacune des pales du rotor par une biellette de pas, est rotatif sur l'autre plateau, non tournant car retenu par des moyens d'anti-rotation le reliant à la structure fixe de l'aéronef. L'ensemble des deux plateaux est translatable selon l'axe de rotation du rotor, pour transmettre aux pales un pas collectif, et inclinable dans toute direction pour transmettre aux pales un pas cyclique variant selon une loi sinusoïdale (fondamental ou ordre 1) au cours d'une rotation du rotor, sous l'action de trois actionneurs de manoeuvre articulés chacun sur le plateau non tournant et sur la structure fixe de l'aéronef.

Dans un tel dispositif, les actionneurs de manoeuvre sont des moyens de commande comprenant généralement des vérins ayant un fonctionnement quasi statique.

Afin d'améliorer les performances des rotors, notamment du point de vue énergétique, il a été proposé d'introduire des harmoniques (ordre 2 et suivants) dans la loi de variation de l'incidence des pales.

Ceci a été réalisé en donnant à l'ensemble de plateaux cycliques une "hauteur" (déplacement en translation parallèlement à l'axe du rotor) et une inclinaison variables dans le temps, mais prédéterminées, à l'aide de vérins hydrauliques non tournants, commandables par ordinateur, et procurant une commande multicyclique.

Il a encore été proposé d'améliorer un tel système de commande multicyclique, à l'aide de capteurs disposés sur les pales pour mesurer leurs mouvements et/ou les efforts aérodynamiques qu'elles supportent, et pour délivrer des signaux permettant un contrôle automatique de l'incidence de chaque pale, indépendamment des autres, et en boucle fermée, en s'affranchissant de la notion d'harmonique de la fréquence de rotation du rotor.

Une telle commande individuelle de pales doit permettre l'obtention d'une variation quelconque de l'incidence de chacune des pales, considérées comme indépendantes les unes des autres, car pouvant rencontrer des perturbations aérodynamiques aléatoires, variables d'une pale à l'autre.

Pour réaliser une commande individuelle du pas de chaque pale, permettant d'améliorer le rendement du rotor, et de diminuer les vibrations et le bruit, il faut donner à chaque pale, dans un repère tournant avec le rotor, une incidence variable quelconque, ce qui nécessite des moyens de commande actifs capables de fonctionner selon des lois plus complexes, prenant en compte des harmoniques.

Il est connu qu'un tel contrôle individuel de chaque pale d'un rotor bipale ou tripale est possible avec un dispositif classique à plateaux cycliques commandé par trois vérins montés en repère fixe, lié au corps de l'aéronef, et dans lequel les plateaux cycliques ayant trois degrés de liberté peuvent commander jusqu'à trois pales et leur donner trois mouvements de pas quelconques et indépendants, sous l'effet d'une commande complexe des vérins qui prend en compte la position azimutale des pales.

On a proposé de généraliser ce type de commande individuelle de pales à des rotors comportant plus de trois pales, à l'aide de vérins hydrauliques montés en repère tournant avec le rotor, en nombre égal aux pales, et dont chacun commande respectivement le pas d'une pale.

Mais ce développement, avec des vérins situés en repère tournant, est d'une mise au point difficile et d'une maintenance coûteuse, notamment au niveau des joints hydrauliques tournants, nécessaires à l'alimentation des vérins hydrauliques à partir des circuits hydrauliques de l'hélicoptère.

Par EP-A-0 451 218, on connait un système de commande individuelle du pas des pales d'un rotor sustentateur quadripale d'hélicoptère. Il comprend un dispositif classique à plateaux cycliques, tel que présenté ci-dessus, avec deux des quatre biellettes de commande de pas entraînées par le plateau tournant qui sont chacune reliées à l'une respectivement de deux bielles de pas de deux pales diamétralement opposées par l'un respectivement de deux leviers pivotant sur le mât rotor.

Les deux autres biellettes de commande de pas, entraînées par le plateau tournant, sont reliées chacune à l'une respectivement des deux bielles de pas des deux autres pales diamétralement opposées par l'un respectivement de deux autres leviers pivotant sur un manchon différentiel rotatif, entraîné en rotation par le mât rotor et translatable parallèlement à l'axe du rotor par un quatrième actionneur, servo-commandé à partir de signaux provenant de capteurs de pales.

Cette commande individuelle de pales connue consiste donc à ajouter, pour deux pales diamétralement opposées, un pas de type collectif, procuré par le manchon rotatif à coulissements axiaux commandés, aux pas collectif et cyclique classiques transmis aux quatre pales par un dispositif à plateaux cycliques classique.

Dans ce système, le manchon rotatif et translatable n'introduit qu'un seul degré de liberté supplémentaire, même s'il commande deux pales. En conséquence, pour un rotor à plus de trois pales, il faut introduire autant de manchons concentriques, rotatifs et coulissants, que de pales au-delà de trois, et l'étude de la commande individuelle des pales doit être entièrement reprise.

Le principe mis en oeuvre par ce système connu est d'agir en différentiel sur une ou plusieurs pales, en particulier deux pales diamétralement opposées par raison de symétrie. Mais il n'y a pas de découplage entre les pales, puisque l'ensemble de plateaux cycliques classiques agit sur les quatre pales alors que le manchon différentiel agit sur deux d'entre elles.

Le système décrit dans EP-A-0 451 218 est un système à pleine autorité pour lequel, en cas de panne de la commande individuelle, il n'est pas prévu explicitement de système permettant un fonctionnement en mode de commande à autorité réduite, d'autant plus qu'en fonctionnement normal, les trois vérins de manoeuvre des plateaux cycliques classiques assurent, en plus de la fonction monocyclique, la fonction de commande individuelle sans découplage entre ces deux fonctions.

Le problème à la base de l'invention est de remédier aux inconvénients des systèmes connus de commande individuelle des pales avec actionneurs tournants ou selon EP-A-0 451 218, et de proposer un dispositif de commande individuelle des pales pour rotor à au moins quatre pales, utilisant des actionneurs de manoeuvre situés dans le repère fixe, conformément à une technologie fiable et bien connue, le nombre de ces actionneurs étant au moins égal à celui des pales à commander.

Un autre but de l'invention est de proposer un dispositif de commande individuelle des pales qui, à partir d'une configuration de commande à pleine autorité, en fonctionnement normal, peut adopter une configuration de commande à autorité réduite, appliquant une loi de commande monocyclique classique, en cas de panne du dispositif de commande individuelle. Ce dispositif peut s'appliquer facilement à des dispositifs de commande individuelle de pales de rotors à deux ou trois pales.

Un autre but enfin de l'invention est de proposer un tel dispositif de commande individuelle, permettant un découplage complet entre groupes de pales, afin de contrôler les vibrations, une vibration importante d'une pale, éventuellement endommagée par un projectile, ne pouvant se transmettre qu'au groupe de pales auquel elle appartient, de sorte qu'il sera plus facile de compenser ces vibrations par la commande individuelle.

L'idée à la base de l'invention est d'utiliser plusieurs ensembles de plateaux cycliques, c'est-à-dire au moins deux ensembles de plateaux cycliques analogues aux dispositifs à plateaux cycliques classiques, qui peuvent chacun au moins être inclinés dans toutes les directions autour d'un centre situé sur l'axe du rotor, et, dans certaines variantes, également être translatés selon cet axe. Ainsi, chaque ensemble de plateaux cycliques peut commander jusqu'à trois pales de façon indépendante, de sorte que pour un rotor à cinq ou six pales, les réalisations mécaniques mises en oeuvre ne sont pas fondamentalement plus complexes que pour un rotor quadripale, cet avantage étant particulièrement sensible lors du développement de diverses versions d'un même hélicoptère, dont le rotor principal peut évoluer d'un rotor quadripale à un rotor à cinq pales par exemple. En effet, un dispositif de commande individuelle des pales à deux ensembles de plateaux cycliques permet de commander le pas sur des rotors à quatre, cinq ou six pales.

Plus précisément, l'invention propose un dispositif de commande individuelle des pales d'un rotor à au moins quatre pales, pour voilure tournante d'aéronef, du type comprenant un premier ensemble de plateaux cycliques, un ensemble de plateaux cycliques comportant un plateau tournant ayant un centre de rotation sur l'axe de rotation du rotor, et rotatif sur un plateau non tournant, ayant un centre d'oscillation sur l'axe du rotor, confondu avec le centre de rotation du plateau tournant et définissant le centre d'un ensemble de plateaux cycliques, ledit premier ensemble étant inclinable dans toutes directions autour de son centre, sous l'action d'au moins deux actionneurs de manoeuvre interposés entre une structure non tournante de l'aéronef et ledit premier ensemble, en étant articulés chacun sur le plateau non tournant, retenu par des moyens de liaison à ladite structure non tournante, tandis que le plateau tournant est entraîné en rotation par des moyens de liaison avec le rotor autour de l'axe du rotor, et relié à chacune d'au moins deux pales du rotor par une biellette de pas respective, le dispositif comportant au moins autant d'actionneurs de manoeuvre que le rotor comporte de pales, et tous les actionneurs étant non tournants, et qui se caractérise en ce qu'il comprend au moins un second ensemble de plateaux cycliques, dont le centre est également situé sur l'axe du rotor, ledit second ensemble étant inclinable dans toutes directions autour de son centre, sous l'action d'au moins un autre actionneur de manoeuvre interposé entre une structure non tournante et ledit second ensemble, dont le plateau non tournant est articulé sur ledit autre actionneur et est retenu par des moyens de liaison à une structure non tournante, tandis que le plateau tournant dudit second ensemble est également entraîné en rotation par des moyens de liaison avec le rotor, autour de l'axe de ce dernier, et est relié à chacune d'au moins une autre pale du rotor par une biellette de pas respective.

Une structure non tournante peut être une structure fixe, comme la cellule de l'hélicoptère, ou un plateau non tournant, par exemple celui d'un autre ensemble de plateaux cycliques.

Un rotor selon l'invention, mais non optimisé, de quatre, cinq ou six pales comprend, par exemple, un premier ensemble de plateaux cycliques inclinable, dont le centre est translatable, sous l'action de trois actionneurs et relié à trois premières pales par trois biellettes de pas, et un second ensemble de plateaux cycliques inclinable, dont le centre est translatable, sous l'action de trois autres actionneurs et relié à une, deux ou trois dernières pales par respectivement une, deux ou trois biellettes de pas.

Un rotor selon l'invention, mais non optimisé, de sept, huit ou neuf pales, comprend un troisième ensemble de plateaux cycliques, identique au premier ensemble.

Au delà de ces exemples, il existe de nombreuses variantes de réalisation dont certaines, optimisées, présentent l'intérêt de mettre en oeuvre un nombre minimum d'actionneurs.

Dans une première variante optimisée, pour un rotor quadripale dont les pales sont groupées en deux paires de pales diamétralement opposées par rapport à l'axe du rotor, le dispositif est tel que les biellettes de pas de deux pales diamétralement opposées sont articulées sur le plateau tournant du premier ensemble de plateaux cycliques, dont le centre est translatable selon l'axe du rotor, et dont le plateau non tournant est articulé sur trois actionneurs de manoeuvre commandant les translations et inclinaisons dudit premier ensemble de plateaux cycliques, les biellettes des deux autres pales diamétralement opposées étant articulées sur le plateau tournant du second ensemble de plateaux cycliques, dont le centre est décalé axialement par rapport à celui du premier ensemble de plateaux cycliques et translatable selon l'axe du rotor, et dont le plateau non tournant est articulé sur un quatrième actionneur de manoeuvre et relié au plateau non tournant du premier ensemble de plateaux cycliques par deux barres rigides de longueur constante, transmettant chacune au plateau non tournant dudit second ensemble les déplacements transmis au plateau non tournant dudit premier ensemble par chacun respectivement de deux actionneurs articulés sur ce dernier.

Dans cette variante, il est en outre avantageux que les deux barres rigides, reliant les deux plateaux non tournants, constituent des moyens de liaison s'opposant à la rotation du plateau non tournant du second ensemble de plateaux cycliques, la retenue du plateau non tournant du premier ensemble pouvant être assurée par des moyens d'anti rotation classiques, tel qu'un compas non tournant.

Selon une seconde variante optimisée de rotor quadripale, deux biellettes de pas de deux pales non diamétralement opposées sont articulées respectivement sur le plateau tournant de chacun de deux ensembles de plateaux cycliques, tandis que le plateau non tournant de chacun des deux ensembles de plateaux cycliques est articulé sur respectivement deux actionneurs de manoeuvre non diamétralement opposés, commandant uniquement les inclinaisons du plateau non tournant correspondant autour du centre d'oscillation correspondant, les centres des deux ensembles de plateaux cycliques ne se translatant pas sur l'axe par rapport à la structure non tournante où sont articulés les actionneurs. Les centres des deux ensembles de plateaux cycliques peuvent être confondus dans cette seconde variante.

D'une manière générale, pour optimiser un rotor à au moins quatre pales, l'invention propose trois modes de réalisation différents, selon que le nombre de pales est un multiple de 3, ou un multiple de 3 augmenté de 2, ou encore un multiple de 3 augmenté de 1.

Si le nombre b de pales est un multiple 3n de 3, n étant un nombre entier supérieur ou égal à 2, le dispositif comprend avantageusement un nombre n d'ensembles de plateaux cycliques, dont chaque centre est translatable selon l'axe du rotor, et dont le plateau tournant de chacun d'eux est articulé à trois biellettes de pas respectives des pales, et dont le plateau non tournant de chacun d'eux est articulé sur et déplacé par trois actionneurs de manoeuvre respectifs. Cette solution consiste à combiner plusieurs dispositifs classiques à plateaux cycliques, dont chacun commande trois pales pouvant être regroupées de toute manière possible, de sorte que le choix peut découler d'impératifs d'encombrement et/ou de symétrie du dispositif.

Pour un rotor dont le nombre b de pales est égal à 3n+2, où n est un nombre entier supérieur ou égal à 1, le dispositif comprend un nombre n d'ensembles de plateaux cycliques, dont chaque centre est translatable selon l'axe du rotor, et dont le plateau tournant de chacun d'eux est articulé à trois biellettes de pas respectives des pales, et dont le plateau non tournant de chacun d'eux est articulé sur et déplacé par trois actionneurs de manoeuvre respectifs, ainsi qu'un autre ensemble de plateaux cycliques, dont le plateau tournant est articulé à deux biellettes de pas respectives de deux pales non diamétralement opposées, et dont le plateau non tournant est articulé sur deux actionneurs de manoeuvre respectifs non diamétralement opposés, commandant uniquement les inclinaisons dudit autre ensemble autour du centre d'oscillation correspondant.

Il est toujours possible pour ce type de rotor de répartir les pales commandées par les n ensembles de plateaux cycliques identiques de sorte que la dernière paire de pales, commandée par l'autre ensemble de plateaux cycliques, ne soit pas constituée de deux pales diamétralement opposées.

Ainsi, pour un rotor à cinq pales, le dispositif comprend deux ensembles de plateaux cycliques, l'un d'eux, identique à celui classiquement utilisé pour un rotor tripale, commandant trois pales du rotor, et le second ensemble, du type dit à centre fixé, commandant les deux pales restantes sous l'action de deux actionneurs positionnant les deux plateaux de ce second ensemble de façon indépendante du positionnement des deux plateaux du premier ensemble sous l'action de ses trois actionneurs de manoeuvre.

Enfin, pour un rotor dont le nombre b de pales est égal à 3n+1, où n est un nombre entier supérieur ou égal à 1, le dispositif comprend un nombre (n-1) d'ensembles de plateaux cycliques, dont chaque centre est translatable selon l'axe du rotor, et dont le plateau tournant de chacun d'eux est articulé à trois biellettes de pas respectives des pales, et dont le plateau non tournant de chacun d'eux est articulé sur et déplacé par trois actionneurs de manoeuvre respectifs, ainsi que deux autres ensembles de plateaux cycliques, le plateau tournant de chacun desdits deux autres ensembles étant articulé à deux biellettes de pas respectives de deux pales non diamétralement opposées, et le plateau non tournant de chacun desdits deux autres ensembles étant articulé sur deux actionneurs de manoeuvre respectifs non diamétralement opposés, commandant uniquement les inclinaisons du plateau non tournant correspondant autour du centre d'oscillation correspondant.

Il est, là encore, toujours possible pour ce type de rotor de répartir les pales commandées par les n-1 ensembles de plateaux cycliques identiques de sorte que les deux dernières paires de pales, commandées par les deux autres ensembles de plateaux cycliques, ne soient pas constituées chacune de deux pales diamétralement opposées.

Ainsi, un rotor à sept pales est commandé par trois ensembles de plateaux cycliques, dont un, identique à celui utilisé classiquement pour un rotor tripale, commande trois pales du rotor, tandis que chacun des deux autres ensembles est du type à centre fixé et commande deux respectivement des quatre autres pales, sous l'action de deux actionneurs respectifs.

Dans un but de sécurité accrue, le dispositif de l'invention peut être aménagé pour présenter une autorité réduite, appliquant une loi de commande classique monocyclique, en cas de panne du dispositif de commande individuelle à pleine autorité selon l'une des configurations précitées, et, à cet effet, chaque actionneur de manoeuvre est non seulement articulé sur un plateau non tournant, mais également sur un plateau de sécurité non tournant, interposé entre les ensembles de plateaux cycliques et la structure fixe de l'aéronef, à laquelle le plateau de sécurité est relié par des moyens d'anti-rotation, le plateau de sécurité étant translatable selon l'axe du rotor et inclinable dans toutes les directions autour de son centre sous l'action de moyens de commande de position, interposés entre le plateau de sécurité et la structure fixe, et de préférence comprenant trois actionneurs de sécurité, articulés chacun d'une part sur le plateau de sécurité et d'autre part sur ladite structure fixe.

L'intérêt d'un tel dispositif est qu'il permet de découpler les fonctions du contrôle actif de pas. Le plateau de sécurité non tournant, inclinable et translatable, et ses moyens de commande de position permettent de contrôler, d'une façon classique, le pas monocyclique de l'ensemble des pales. La loi de commande ne prenant en compte que le premier ordre, les actionneurs dits "de sécurité" retrouvent un fonctionnement quasi statique. Chaque ensemble de plateaux cycliques contrôle, quant à lui, le pas individuel de une, deux ou trois pales, ses actionneurs fonctionnant selon des lois de commande prenant en compte les harmoniques exclusivement. Les débattements de ces actionneurs, par exemple des vérins dits vérins de manoeuvre, se trouvent ainsi limités.

Avantageusement, dans cette variante, le dispositif est complété par des moyens de verrouillage de la commande individuelle de pas de chaque pale, lesdits moyens de verrouillage étant portés par lesdits actionneurs de manoeuvre, et limitant la commande à une commande monocyclique des pales par la commande des translations et inclinaisons du plateau de sécurité. A cet effet, les moyens de verrouillage comprennent avantageusement, pour chaque actionneur de manoeuvre, un dispositif de verrouillage dudit actionneur de manoeuvre en position neutre, lequel dispositif de verrouillage peut comprendre deux crémaillères, dont chacune est destinée à bloquer l'actionneur de manoeuvre correspondant dans l'un respectivement des deux sens de manoeuvre dudit actionneur.

Le plateau de sécurité est inclinable, de manière simple, sur une rotule centrale montée coulissante axialement autour du mât rotor ou d'un manchon entourant ce mât. Si l'un au moins des ensembles à plateaux cycliques a son plateau non tournant uniquement incliné par deux actionneurs de manoeuvre correspondants autour du centre d'oscillation correspondant sur l'axe du rotor, ce centre d'oscillation est avantageusement défini sur un manchon monté coulissant axialement autour du mât rotor, et portant la rotule centrale du plateau de sécurité.

En outre, lorsque les plateaux tournants de deux ensembles de plateaux cyliques voisins ont des diamètres différents, le dispositif comprend avantageusement deux mécanismes non tournant à leviers articulés, chacun interposé entre un actionneur de manoeuvre du plateau non tournant de l'un des deux ensembles et ledit plateau non tournant, de sorte à donner une inclinaison à l'un des deux ensembles qui soit différente de celle du plateau de sécurité, de manière à compenser les différences de diamètre entre les plateaux tournants.

Dans tous les modes de réalisation décrits ci-dessus, si l'on considère des ensembles de plateaux cycliques le long de l'axe du rotor, leurs plateaux tournants peuvent, par exemple, être montés rotatifs soit tous à l'intérieur soit tous à l'extérieur des plateaux non tournants respectifs.

Dans le premier cas (plateaux tournants intérieurs), au moins une biellette de pas traverse une lumière aménagée dans chaque plateau tournant des ensembles de plateaux cycliques interposés entre le plateau tournant sur lequel ladite biellette est articulée et les pales que ledit plateau tournant commande.

Dans le second cas (plateaux tournants extérieurs), au moins un actionneur traverse une lumière aménagée dans chaque plateau non tournant des ensembles de plateaux cycliques interposés entre le plateau non tournant sur lequel ledit actionneur est articulé et une structure non tournante.

Il existe de nombreuses combinaisons de positions des plateaux d'ensembles différents, conduisant à de nombreuses variantes de réalisation de l'invention.

Par exemple, dans le cas d'un rotor à deux ensembles de plateaux cycliques, il existe une variante où c'est le plateau tournant de celui des deux ensembles de plateaux cycliques voisins le long de l'axe du rotor qui est interposé entre l'autre ensemble de plateaux cycliques et la structure fixe de l'aéronef qui est monté rotatif autour du plateau non tournant correspondant, alors que le plateau tournant dudit autre ensemble de plateaux cycliques est monté rotatif à l'intérieur du plateau non tournant correspondant, et les biellettes de pas, articulées au plateau tournant de celui des ensembles de plateaux cycliques qui est interposé axialement entre l'autre ensemble et la structure de l'aéronef, traversent des lumières dans le plateau tournant de l'autre ensemble.

Dans certaines de ces configurations, et en particulier lorsque les plateaux tournants ont sensiblement le même diamètre, il peut être avantageux que l'une au moins des biellettes de pas ne soit pas rectiligne et soit articulée sur le plateau tournant correspondant par des moyens d'articulation interdisant la rotation de ladite biellette autour d'un axe perpendiculaire audit plateau tournant, tels que des moyens d'articulation par cardans.

Enfin, dans ces différentes réalisations, il est possible que deux ensembles de plateaux cycliques voisins le long de l'axe du rotor aient leurs plateaux non tournants reliés l'un à l'autre et à la structure fixe de l'aéronef par au moins un double compas articulé d'anti-rotation et/ou leurs plateaux tournants reliés l'un à l'autre et au rotor par au moins un double compas articulé d'entraînement en rotation.

D'autres caractéristiques et avantages de l'invention découleront de la description ci-dessous, à titre non limitatif, d'exemples de réalisation décrits en référence aux dessins annexés sur lesquels :

- la figure 1 est un schéma de dispositif à deux ensembles de plateaux cycliques, pour la commande individuelle des pales groupées en paires de pales diamétralement opposées (ou à 180°) d'un rotor principal quadripale d'hélicoptère,
- les figures 2, 3 et 4 représentent trois exemples de dispositifs selon la figure 1, respectivement avec deux plateaux tournants intérieurs, deux plateaux tournants extérieurs, et un plateau tournant supérieur intérieur et un plateau tournant inférieur extérieur,
- les figures 5 et 6 représentent des montages du centre d'un plateau tournant autour du mât rotor,
- les figures 7 à 9 représentent des exemples de moyens d'anti-rotation pour les dispositifs des figures 2 à 4,
- la figure 8a représente un détail de la fixation des moyens d'anti-rotation de la figure 8,
- les figures 10, 11 et 12 représentent schématiquement trois exemples de dispositifs à deux ensembles de plateaux cycliques, du type à centre fixé, pour la commande de deux pales non diamétralement opposées par chaque ensemble de plateaux cycliques, pour un rotor principal quadripale d'hélicoptère, respectivement avec deux plateaux tournants intérieurs, deux plateaux tournants extérieurs, et un plateau tournant supérieur intérieur et un plateau tournant inférieur extérieur,
- les figures 13 et 14 représentent schématiquement des dispositifs pour rotor à respectivement cinq et six pales,
- la figure 15 représente schématiquement le montage sur le mât rotor de deux plateaux d'ensembles de plateaux cycliques du type à centre fixé selon les figures 10 à 12, dans un dispositif de commande individuelle à pleine autorité,
- la figure 16 représente schématiquement et partiellement un dispositif de commande à autorité réduite, avec plateau de sécurité supplémentaire,
- la figure 17 est analogue à la figure 15 pour un dispositif à autorité réduite selon la figure 16,
- la figure 18 représente schématiquement une variante du dispositif à autorité réduite de la figure 16, avec plateaux tournants de diamètres différents, et un dispositif de compensation d'inclinaison des plateaux par levier articulé,
- la figure 19 représente schématiquement, en partie en coupe et en partie en élévation latérale, un vérin avec dispositif de verrouillage en position neutre, utilisable comme actionneur de manoeuvre dans un dispositif à autorité réduite selon la figure 16.

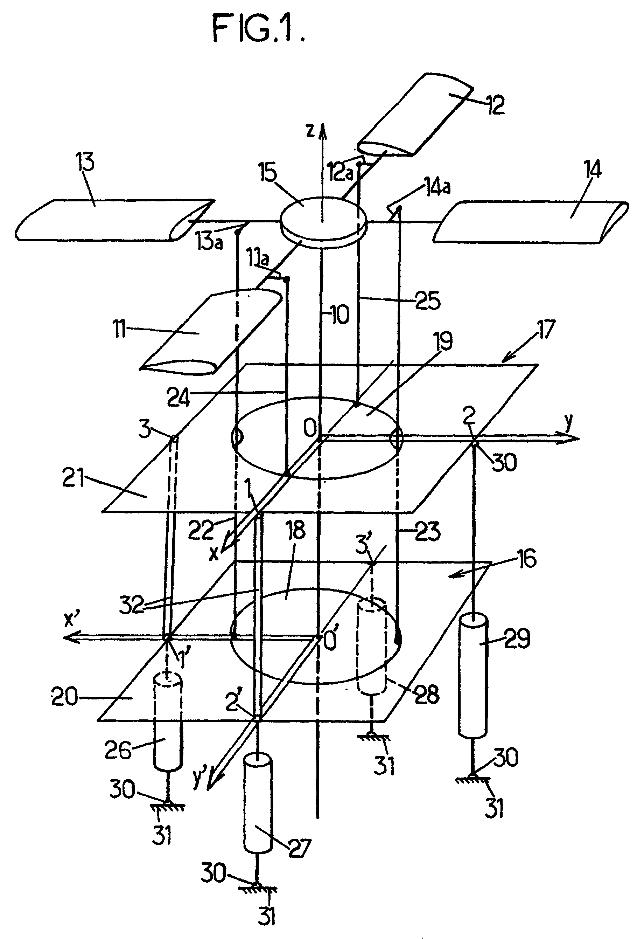

La figure 1 représente schématiquement un rotor principal quadripale d'hélicoptère équipé d'un dispositif de commande individuelle des pales groupées en deux paires de pales diamétralement opposées, ou pales à 180°.

Le rotor comprend un mât rotor 10, schématisé par l'axe de rotation Oz du rotor, et entraînant en rotation autour de cet axe Oz quatre pales 11, 12, 13, 14, opposées deux à deux par rapport à l'axe Oz, par l'intermédiaire d'un moyeu 15. Les pales 11 à 14 ont chacune un levier de pas 11a, 12a, 13a et 14a, en général en saillie vers le bord d'attaque ou le bord de fuite de la pale correspondante, et dont les déplacements dans un plan sensiblement perpendiculaire à l'axe longitudinal de changement de pas de la pale correspondante, permettent de commander le pas. Ces déplacements sont commandés par un dispositif de commande individuelle du pas, qui comporte deux ensembles de plateaux cycliques 16 et 17, dont chacun présente un centre de rotation de son plateau tournant et un centre d'oscillation de son plateau non tournant qui sont confondus et situés sur l'axe du rotor, en un point appelé centre de l'ensemble de plateaux cycliques et décalé axialement par rapport au centre commun de rotation et d'oscillation de l'autre ensemble, et chacun schématisé sous la forme d'un plan ou plateau, chaque ensemble 16 ou 17 commandant deux pales opposées. Les pales 11 et 12 commandées par l'ensemble supérieur 17 sont à 180° l'une de l'autre, de même que les pales 13 et 14 commandées par l'ensemble inférieur 16.

De manière connue, chaque ensemble 16 ou 17 de plateaux cycliques est monté inclinable sur son centre O' ou O d'oscillation dans toute direction par des moyens formant rotule sphérique, et simultanément translatable selon l'axe Oz, par le montage coulissant des moyens de rotule autour du mât rotor 10. De plus, chaque ensemble de plateaux cycliques 16 ou 17 comprend deux plateaux annulaires, entourant le mât rotor 10, et dont l'un est un plateau tournant, entraîné en rotation autour du centre de rotation correspondant par exemple par le mât rotor 10 à l'aide d'un compas articulé, et monté rotatif sur un plateau non tournant, retenu en étant relié à une structure fixe de l'hélicoptère par des moyens d'anti-rotation, tel qu'un compas articulé non tournant. En outre, le plateau tournant de chaque ensemble 16 ou 17 est relié aux leviers de pas des pales qu'il commande par des biellettes de pas, tandis que les translations et inclinaisons des ensembles 16 et 17 sont commandées par des actionneurs de manoeuvre, tels que des vérins hydrauliques, interposés entre la structure fixe de l'hélicoptère et les ensembles 16 et 17 de plateaux cycliques, et articulés par des rotules d'une part sur cette structure fixe et d'autre part sur les plateaux non tournants des ensembles 16 et 17.

Sur la figure 1, chaque ensemble 16 ou 17 de plateaux cycliques est schématisé avec un plateau tournant central 18 ou 19 rotatif, autour du centre O' ou O sur l'axe OZ, à l'intérieur d'un plateau non tournant extérieur 20 ou 21, le plateau tournant inférieur 18 (le plus proche de la structure de l'hélicoptère) étant relié aux deux pales 13 et 14 dont il commande le pas par deux biellettes de pas 22 et 23, diamétralement opposées, dont chacune est articulée par des rotules à son extrémité inférieure sur ce plateau tournant 18 et à son extrémité supérieure sur l'extrémité du levier de pas 13a ou 14a correspondant.

De même, le plateau tournant supérieur 19 (le plus proche des pales) est relié aux deux pales 11 et 12 dont il commande le pas par deux biellettes de pas 24 et 25, diamétralement opposées, dont chacune est articulée par des rotules à son extrémité inférieure sur le plateau tournant 19 et à son extrémité supérieure sur l'extrémité du levier de pas 11a ou 12a correspondant.

Chaque ensemble de plateaux 16 et 17 doit être soutenu en trois points de son plateau non tournant respectif 20 ou 21, et la position verticale de ces points est déterminée par les quatre actionneurs ou vérins de manoeuvre 26, 27, 28 et 29, en nombre égal aux pales, et montés en repère fixe, c'est-à-dire non tournant autour de l'axe du rotor Oz, en étant articulés par des rotules telles que 30, d'une part, à l'extrémité inférieure, sur la structure fixe 31 de l'hélicoptère, et, d'autre part, à leur extrémité supérieure, sur les plateaux non tournants 20 et 21.

Comme les quatre vérins 26 à 29 doivent déterminer six points, repérés en 1, 2, 3 sur l'ensemble 17 et en 1', 2', 3' sur l'ensemble 16, deux vérins 26 et 27 commandent chacun la position de deux points, dont un sur chaque ensemble de plateaux 16 ou 17, et les deux autres vérins 28 et 29 commandent chacun seulement un point, l'un 28 le point 3' de l'ensemble 16 et l'autre 29 le point 2 de l'ensemble 17.

Pour que les vérins 26 et 27 commandent la position non seulement des points 1' et 2' respectivement de l'ensemble de plateaux inférieur 16, mais également des points 3 et 1 respectivement de l'ensemble de plateaux supérieur 17, les deux plateaux non tournants 20 et 21 sont reliés l'un à l'autre par deux barres 32 rigides de longueur constante, chacune articulée sur les deux plateaux non tournants, l'une entre les points 1' et 3 et l'autre entre les points 2' et 1 de ces deux plateaux.

L'étude mathématique de ce système est présentée comme suit.

Sur la figure 1, la position de l'ensemble à plateaux supérieur 17 est déterminée par les hauteurs (ou variations de hauteur à partir d'un plan de référence, par exemple horizontal) $h_1$, $h_2$, $h_3$ des points 1, 2, 3, et la position de l'ensemble à plateaux inférieur 16 est déterminée par les hauteurs $h'_1$, $h'_2$, $h'_3$ des points 1', 2', 3'. On a les deux relations suivantes :

$$h'_1 = h_3 \text{ et } h'_2 = h_1,$$

car les points 1' et 3, et les points 2' et 1 sont reliés par les barres 32.

Tous les vérins 26 à 29 sont situés à une distance R de l'axe du rotor Oz.

Dans un repère absolu OXYZ lié à la structure fixe 31 et tel que OZ est confondu avec l'axe du rotor Oz du repère Oxyz ou O'x'y'z tournant autour de Oz, on définit un plan par l'équation :

$$aX + bY + Z = d.$$

Si a, b, d sont les coefficients du plan de l'ensemble à plateaux supérieur 17, on a :

$$(B-1) \begin{pmatrix} a \\ b \\ d \end{pmatrix} = -\frac{1}{R} \begin{pmatrix} 1 & -\frac{1}{2} & -\frac{1}{2} \\ 0 & \frac{1}{2} & -\frac{1}{2} \\ 0 & -\frac{R}{2} & -\frac{R}{2} \end{pmatrix} \begin{pmatrix} h_1 \\ h_2 \\ h_3 \end{pmatrix}$$

L'ensemble à plateaux supérieur 17 commande deux pales, la pale 11 dont l'azimut dans le repère absolu est $\Phi = \Omega t + \varphi$, où $\Omega$ est la vitesse de rotation du rotor et t le temps, et la pale 12 dont l'azimut est $\Phi_2 = \Phi + \pi$. Les hauteurs des pieds des biellettes 24 et 25 des pales 11 et 12 sont $H_1$ et $H_2$.
On a :

$$(B-2) \begin{pmatrix} H_1 \\ H_2 \end{pmatrix} = -\begin{pmatrix} r\cos\Phi & r\sin\Phi & -1 \\ -r\cos\Phi & -r\sin\Phi & -1 \end{pmatrix} \begin{pmatrix} a \\ b \\ d \end{pmatrix}$$

où r est le rayon du plateau tournant 19 de l'ensemble de plateaux supérieur 17.
En combinant (B-1) et (B-2) il vient :

$$(B-3) \begin{pmatrix} H_1 \\ H_2 \end{pmatrix} = \frac{1}{R} \begin{pmatrix} r\cos\Phi & -\frac{r}{2}\cos\Phi - \frac{r}{2}\sin\Phi + \frac{R}{2} & -\frac{r}{2}\cos\Phi - \frac{r}{2}\sin\Phi + \frac{R}{2} \\ -r\cos\Phi & \frac{r}{2}\cos\Phi - \frac{r}{2}\sin\Phi + \frac{R}{2} & \frac{r}{2}\cos\Phi + \frac{r}{2}\sin\Phi + \frac{R}{2} \end{pmatrix} \begin{pmatrix} h_1 \\ h_2 \\ h_3 \end{pmatrix}$$

L'ensemble inférieur 16 commande les pales 13 et 14, et on suppose que l'azimut de la pale 13 est :

$$\Phi' = \Phi - \frac{\pi}{2}.$$

Dans ce cas la position relative de la pale 13 par rapport aux vérins 26, 27 et 28, reliés aux points 1', 2', 3' est la même que la position relative de la pale 11 par rapport aux vérins 26, 27 et 29, reliés aux points 1, 2, 3.
La pale 14 a pour azimut

$$\Phi'_2 = \Phi + \frac{\pi}{2}.$$

La position relative de la pale 14 par rapport aux vérins 26, 27 et 28, reliés aux points 1', 2', 3' est la même que la position relative de la pale 12 par rapport aux vérins 26, 27 et 29, reliés aux points 1, 2, 3. De ce fait, le système B-4 se déduit immédiatement du système B-3 en changement simplement r en r', si le plateau tournant 18 de l'ensemble inférieur 16 a un rayon r' différent du rayon r du plateau tournant 19, et où H'1 et H'2 sont les hauteurs des pieds des biellettes 22 et 23 des pales 13 et 14.

(B-4)

$$(B-4)\begin{pmatrix} H'_1 \\ \\ H'_2 \end{pmatrix} = \frac{1}{R}\begin{pmatrix} r'\cos\Phi & -\dfrac{r'}{2}\cos\Phi + \dfrac{r'}{2}\sin\Phi + \dfrac{R}{2} & -\dfrac{r'}{2}\cos\Phi - \dfrac{r'}{2}\sin\Phi + \dfrac{R}{2} \\ \\ -r'\cos\Phi & \dfrac{r'}{2}\cos\Phi - \dfrac{r'}{2}\sin\Phi + \dfrac{R}{2} & \dfrac{r'}{2}\cos\Phi + \dfrac{r'}{2}\sin\Phi + \dfrac{R}{2} \end{pmatrix}\begin{pmatrix} h'_1 \\ \\ h'_2 \\ \\ h'_3 \end{pmatrix}$$

Dans (B-4), l'angle $\Phi$ est l'angle de la pale 11 commandée par l'ensemble de plateaux supérieur 17 avec le point 1. En combinant (B-3) et (B-4) et en tenant compte des relations entre les h et les h', il vient finalement :
(B-5)

$$\begin{pmatrix} H_1 \\ H_2 \\ H'_1 \\ H'_2 \end{pmatrix} = \frac{1}{R}\begin{pmatrix} r\cos\Phi & -\dfrac{r}{2}\cos\Phi + \dfrac{r}{2}\sin\Phi + \dfrac{R}{2} & -\dfrac{r}{2}\cos\Phi - \dfrac{r}{2}\sin\Phi + \dfrac{R}{2} & 0 \\ -r\cos\Phi & \dfrac{r}{2}\cos\Phi - \dfrac{r}{2}\sin\Phi + \dfrac{R}{2} & \dfrac{r}{2}\cos\Phi + \dfrac{r}{2}\sin\Phi + \dfrac{R}{2} & 0 \\ -\dfrac{r'}{2}\cos\Phi - \dfrac{r'}{2}\sin\Phi + \dfrac{R}{2} & 0 & r'\cos\Phi & -\dfrac{r'}{2}\cos\Phi - \dfrac{r'}{2}\sin\Phi + \dfrac{R}{2} \\ \dfrac{r'}{2}\cos\Phi - \dfrac{r'}{2}\sin\Phi + \dfrac{R}{2} & 0 & -r'\cos\Phi & \dfrac{r'}{2}\cos\Phi + \dfrac{r'}{2}\sin\Phi + \dfrac{R}{2} \end{pmatrix}\begin{pmatrix} h_1 \\ h_2 \\ h_3 \\ h'_3 \end{pmatrix}$$

Il faut maintenant inverser le système (B-5) pour être assuré d'une relation biunivoque, nécessaire à une commande individuelle du pas des pales, entre les $H_1$, $H_2$, $H'_1$, $H'_2$ et les $h_1$, $h_2$, $h_3$, $h'_3$. On obtient :

$$(B-6)\begin{pmatrix} h_1 \\ \\ h_2 \\ \\ h_3 \\ \\ h'_3 \end{pmatrix} = \begin{pmatrix} -\dfrac{\cos\Phi}{2}A & -\dfrac{\cos\Phi}{2}B & \dfrac{\sin\Phi}{2}A' & \dfrac{\sin\Phi}{2}B' \\ \\ 1-\dfrac{\sin\Phi}{2}A & 1-\dfrac{\sin\Phi}{2}B & -\dfrac{\cos\Phi}{2}A' & -\dfrac{\cos\Phi}{2}B' \\ \\ \dfrac{\sin\Phi}{2}A & \dfrac{\sin\Phi}{2}B & \dfrac{\cos\Phi}{2}A' & \dfrac{\cos\Phi}{2}B' \\ \\ \dfrac{\cos\Phi}{2}A & \dfrac{\cos\Phi}{2}B & 1-\dfrac{\sin\Phi}{2}A' & 1-\dfrac{\sin\Phi}{2}B' \end{pmatrix}\begin{pmatrix} H_1 \\ \\ H_2 \\ \\ H'_1 \\ \\ H'_2 \end{pmatrix}$$

Dans (B-6) on a posé :

$$A = -\cos\Phi + \sin\Phi - \frac{R}{r}$$

$$B = -\cos\Phi + \sin\Phi + \frac{R}{r}$$

$$A' = +\cos\Phi + \sin\Phi + \frac{R}{r'}$$

$$B' = +\cos\Phi + \sin\Phi - \frac{R}{r'}$$

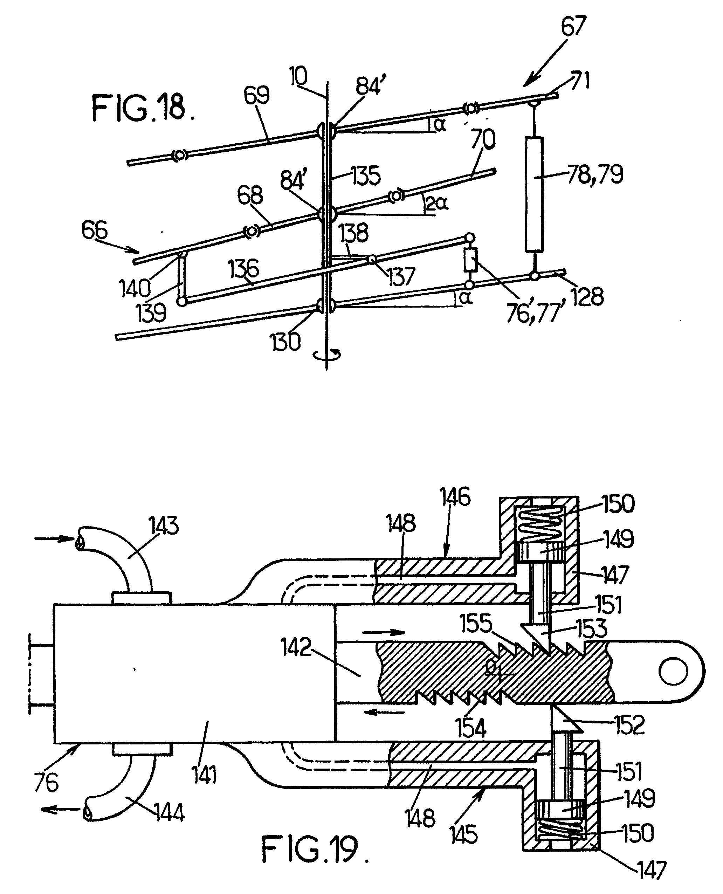

Par les équations (B-5) et (B-6), on est assuré de la validité de la configuration de la figure 1, qui est un dispositif pour pales à 180°, utilisable pour une commande individuelle de pales à pleine autorité, lorsque les vérins 26 à 29 sont articulés sur la structure 31 de l'hélicoptère, mais également utilisable pour une commande individuelle à autorité réduite, lorsque ces vérins sont articulés sur un plateau de sécurité, comme décrit ci-dessous en référence aux figures 16 à 18.

La configuration géométrique de la figure 1 n'est pas triviale, car d'autres configurations ont été essayées et n'ont pas conduit à des systèmes inversibles, ces autres configurations ne permettant donc pas d'obtenir des mouvements quelconques indépendants pour les quatre pales, lorsqu'elles sont prises deux à deux dans le prolongement l'une de l'autre. Inversement, le dispositif de la figure 1 ne convient pas lorsque les pales d'un couple de pales sont à 90° l'une de l'autre. A cet effet, il suffit de montrer que, pour une position azimutale particulière, il n'est pas possible de donner une incidence quelconque aux quatre pales. Si, par hypothèse, l'ensemble de plateaux supérieur 17 commande les pales 14 et 12 et l'ensemble de plateaux inférieur 16 commande les pales 13 et 11, en supposant la pale 13 dans la direction de l'axe O'x' (voir figure 1), la pale 11 est alors dans la direction de l'axe O'y', la pale 14 dans la direction de l'axe Oy et la pale 12 dans la direction opposée à l'axe Ox. Le calage en pas de la pale 13 est déterminé par la hauteur du point 1', ce qui fixe aussi la hauteur du point 3. Le calage en pas de la pale 11 est déterminé par la hauteur du point 2', ce qui fixe aussi la hauteur du point 1. Enfin, le calage en pas de la pale 14 est déterminé par la hauteur du point 2. La hauteur des points 1, 2, 3 du plateau non tournant supérieur 21 est fixée, et le plan de ce plateau supérieur 21 est donc complètement déterminé, et il ne reste plus de degré de liberté disponible pour fixer arbitrairement le calage en pas de la pale 12.

Donc, dans le dispositif de la figure 1 chacun des deux plateaux tournants 18 et 19 commande l'une respectivement des deux paires de pales diamétralement opposées, et l'un 20 des deux plateaux non tournants est positionné par trois vérins 26, 27 et 28, tandis que l'autre plateau non tournant 21 est positionné par le quatrième vérin 29 et les deux barres 32 transmettant au plateau non tournant 21 les déplacements commandés au plateau non tournant 20 par les deux vérins 26 et 27.

L'examen des équations du système (B-6) montre que, pour obtenir une variation du pas d'une pale à la fréquence f, il faut faire fonctionner les vérins à une fréquence f' = f + 2f₀, où f₀ est la fréquence de rotation du rotor, ce qui augmente sensiblement la bande passante nécessaire des vérins 26 à 29, par rapport à celle de vérins de commande individuelle des pales d'un rotor tripale.

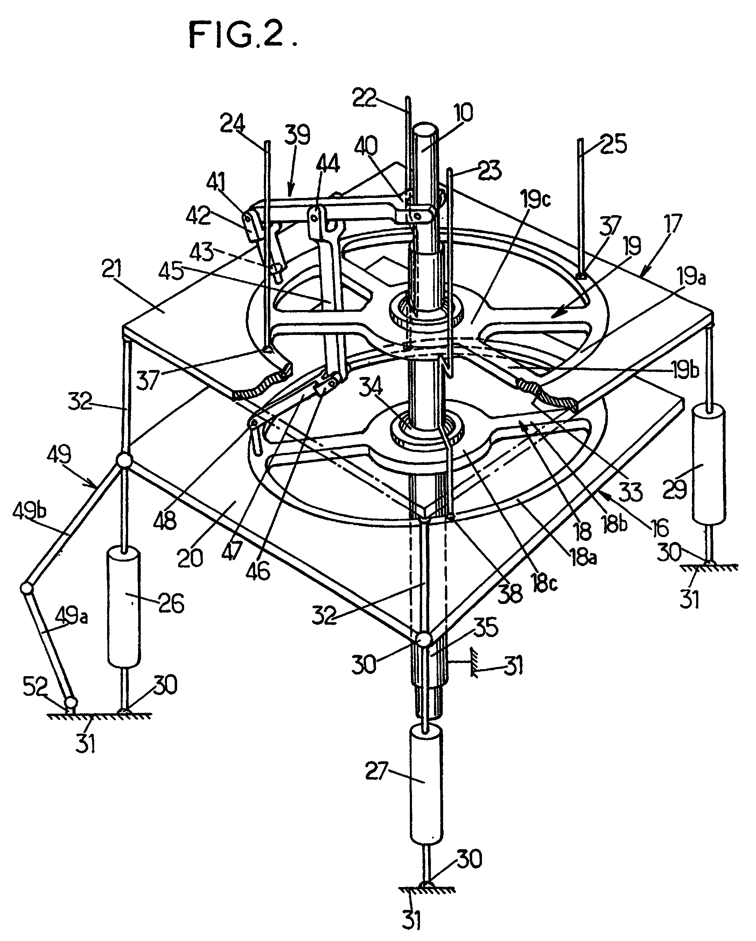

Le blocage en rotation des plateaux non tournants autour de l'axe Oz du rotor peut être assuré, pour le plateau inférieur 20, par un compas articulé classique, et, pour le plateau supérieur 21, par les barres 32 le reliant au plateau inférieur 20, comme décrit ci-dessous et représenté sur les exemples des figures 2 à 4 et 7 et 8.

La figure 2 représente un exemple de dispositif selon la figure 1 avec plateaux tournants internes.

On retrouve les deux barres 32 de liaison, joignant les plateaux non tournants inférieur 20 et supérieur 21, et chacune dans le prolongement de l'un respectivement 26 ou 27 de deux des trois vérins (le troisième vérin n'étant pas visible sur la figure 2) articulés entre la structure fixe 31 de l'hélicoptère et le plateau non tournant 20 de l'ensemble inférieur 16 de plateaux cycliques. Chaque barre 32 est, comme chaque vérin, articulée à ses extrémités par deux rotules sphériques 30 ou des moyens équivalents. De même, le quatrième vérin 29 est articulé sur la structure fixe 31 et sur le plateau non tournant 21 de l'ensemble supérieur 17 par deux rotules 30. Les plateaux tournants inférieur 18 et supérieur 19 sont montés en rotation à l'intérieur des plateaux non tournants respectivement inférieur 20 et supérieur 21, de manière connue à l'aide d'au moins un roulement à billes, tel que schématisé en 33 pour l'ensemble supérieur 17.

Sur la figure 2, chaque plateau tournant 18 ou 19 comprend une jante 18a ou 19a reliée par des rayons 18b ou 19b à un moyeu 18c ou 19c oscillant sur une rotule sphérique centrale 34 montée coulissante axialement autour d'un manchon 35 entourant le mât rotor 10 et également fixé à la structure 31.

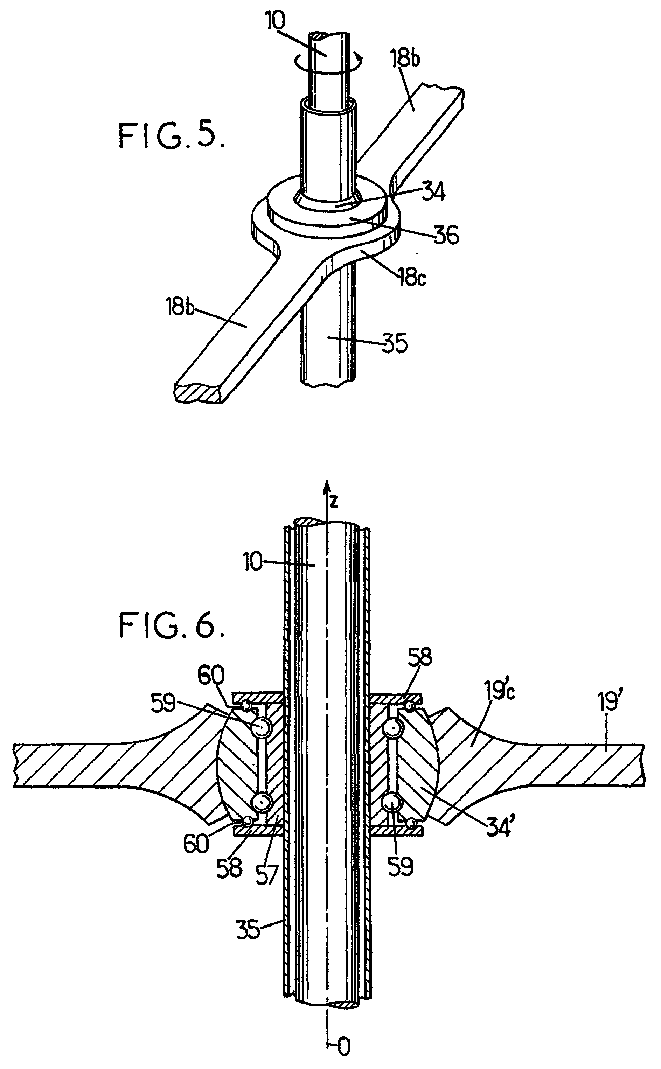

L'articulation d'un plateau tournant sur une rotule centrale 34 est représentée sur la figure 5 pour le plateau tournant inférieur 18. La rotule 34, coulissant sur le manchon 35 en configuration de pales à 180°, est entourée d'une couronne 36, coopérant avec la rotule 34 par une portée interne concave et sphérique, et portant un roulement à billes (non représenté) interposé entre la couronne 36 et le moyeu 18c du plateau tournant inférieur 18a.

La structure ajourée du plateau tournant supérieur 19, permet aux deux biellettes 22 et 23, articulées sur le plateau tournant inférieur 18, de traverser les lumières délimitées entre les rayons 19b du plateau tournant supérieur 19, sans interférence mécanique avec ce dernier, puisque les plateaux tournants 18 et 19, et donc les biellettes 22 à 25, tournent à la même vitesse que le rotor et ses pales. Mais comme les plateaux tournants 18 et 19 ont sensiblement le même diamètre, les biellettes 22 et 23 entraînées par le plateau tournant inférieur 18 ne sont plus rectilignes, mais présentent une forme adaptée au passage au travers du plateau tournant supérieur 19, contrairement aux biellettes 24 et 25, rectilignes et articulées par des rotules 37 sur ce plateau tournant supérieur 19. Du fait de leur forme non rectiligne, les biellettes 22 et 23 sont articulées sur le plateau tournant inférieur 18 par des moyens interdisant toute rotation autour d'un axe perpendiculaire à ce plateau 18, donc non pas par une rotule mais par exemple par une articulation à cardans 38.

Ainsi, par le choix d'une forme quelconque mais appropriée des biellettes articulées au plateau tournant inférieur, on peut librement choisir les diamètres des plateaux tournants.

L'entraînement en rotation des plateaux tournants 18 et 19 est assuré par un double compas articulé 39, comportant une partie supérieure entraînant le plateau tournant supérieur 19, et constituée d'une fourche 40 pivotant autour d'un axe diamétral traversant le mât rotor 10 et dont le manche est articulé à pivotement en 41 dans une seconde fourche 42 articulée par son manche à l'aide d'une rotule sphérique 43 sur le plateau tournant 19. Le double compas 39 comprend également une partie inférieure avec une fourche 44 montée pivotante sur le manche de la fourche 40, et dont le bras 45 est lui-même pivotant dans une autre fourche 46 elle-même articulée par son bras 47 sur le plateau tournant inférieur 18 par une rotule sphérique 48. Les rotules 43 et 48 d'articulation du double compas d'entraînement 39 sur les plateaux tournants 18 et 19 assurent chacune une liberté de rotation selon deux axes parallèles au plan du plateau tournant correspondant.

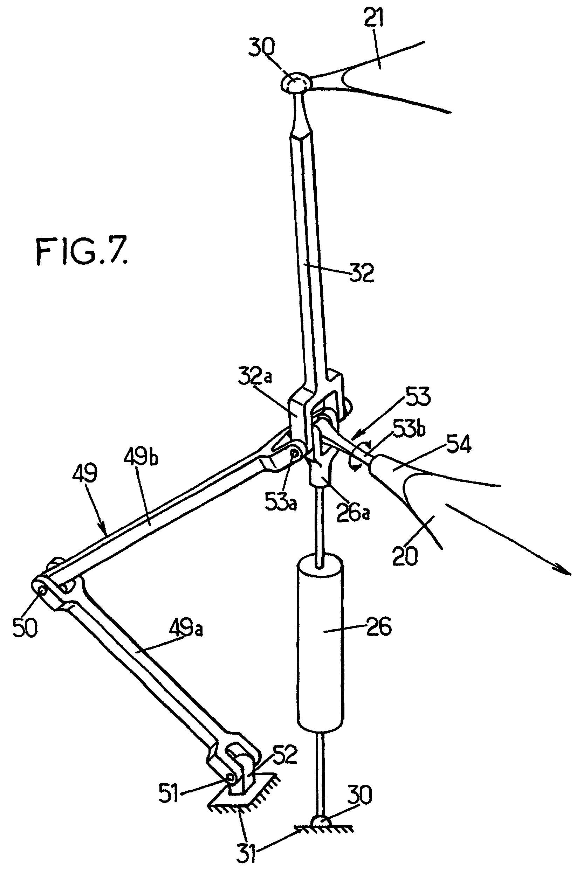

La retenue des deux plateaux non tournants 20 et 21 est assurée à l'aide d'un compas articulé d'anti-rotation 49, plus précisément représenté sur la figure 7. Ce compas 49 comprend deux branches 49a et 49b agencées en fourche et montées pivotantes l'une sur l'autre par un pivot 50, la branche inférieure 49a étant également montée pivotante autour d'un pivot 51, parallèle au pivot 50, sur une ferrure 52 solidaire de la structure fixe 31. La branche supérieure 49b est également montée pivotante, ainsi que l'extrémité inférieure en fourche 32a d'une barre 32, sur la traverse 53a parallèle au pivot 51 d'un pivot en "T" 53, dont le pied 53b pivote autour de son axe longitudinal, radial par rapport au mât rotor 10, dans un manchon 54 solidaire du plateau non tournant inférieur 20. L'extrémité supérieure de la tige du vérin 26 est également conformée en fourche 26a pivotante autour de la traverse 53a du pivot en "T" 53. Ce montage permet d'utiliser la barre 32, articulée par une rotule sphérique 30 à son extrémité supérieure sur le plateau non tournant supérieur 21, comme moyen d'anti-rotation associé au compas 49 pour retenir les deux plateaux non tournants 20 et 21.

Bien entendu, on peut utiliser un compas articulé classique d'anti-rotation pour retenir chacun des deux plateaux non tournants 20 et 21, et on peut utiliser deux compas articulés classiques pour entraîner, par chacun d'eux, l'un respectivement des deux plateaux tournants 18 et 19, au prix d'un encombrement plus grand, puisque le compas d'entraînement du plateau tournant inférieur 18 doit avoir au moins un bras assez long pour s'articuler sur le mât rotor 10 au-dessus du manchon 35.

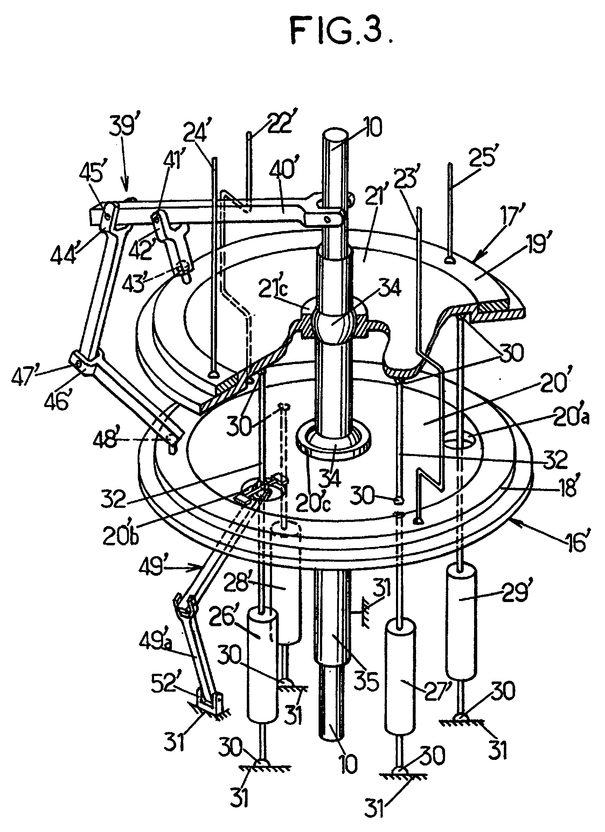

La figure 3 est une variante du dispositif pour pales à 180° de la figure 1, dans laquelle les deux plateaux tournants inférieur 18' et supérieur 19' sont externes, et tournent autour du plateau non tournant inférieur 20' ou supérieur 21' correspondant.

Chacun des plateaux non tournants 20' et 21' est monté oscillant autour du mât rotor 10 et coulissant parallèlement à ce mât à l'aide d'une rotule sphérique centrale 34, qui coulisse axialement autour du manchon fixe 35 entourant le mât 10, et sur laquelle le plateau 20' ou 21' est directement monté oscillant par son moyeu 20'c ou 21'c, l'interposition d'une couronne et d'au moins un roulement entre la rotule et le moyeu du plateau, comme décrit ci-dessus en référence à la figure 5, devenant facultative du fait que le plateau concerné est non tournant.

Les biellettes 22' et 23' diamétralement opposées et entraînées par le plateau tournant inférieur 18' ne sont pas rectilignes, comme cela est également le cas dans l'exemple précédent, mais sont dans cet exemple déformées pour passer à l'extérieur de l'ensemble supérieur 17' à plateaux cycliques, dont le diamètre est sensiblement le même que celui de l'ensemble inférieur 16' à plateaux cycliques, tandis que les biellettes 24' et 25' diamétralement opposées et articulées par rotule sur le plateau tournant supérieur 19' sont rectilignes. Pour ces raisons, et comme sur la figure 2, les biellettes non rectilignes 22' et 23' s'articulent sur le plateau tournant inférieur 18' par des cardans.

Comme sur la figure 2, l'entraînement en rotation des plateaux tournants 18' et 19' est assuré, depuis le mât 10 et au-dessus du manchon 35, par un double compas articulé 39', dont la partie supérieure comporte une fourche 40' pivotant autour d'un axe diamétral traversant le mât 10, et articulée à pivotement en 41' dans une seconde fourche 42' articulée par son manche à l'aide d'une rotule sphérique 43' sur le plateau tournant supérieur 19'. L'autre partie du compas 39', qui entraîne le plateau tournant inférieur 18', comprend également deux fourches 44' et 46' passant à l'extérieur de l'ensemble supérieur 17' à plateaux cycliques, et articulées la première 44' sur le manche de la fourche 40', autour d'un pivot 45' à l'extérieur de la fourche 42', et la seconde 46' par une rotule 48' sur le plateau tournant inférieur 18', les fourchettes 44' et 46' étant également articulées à pivotement l'une sur l'autre autour du pivot 47'.

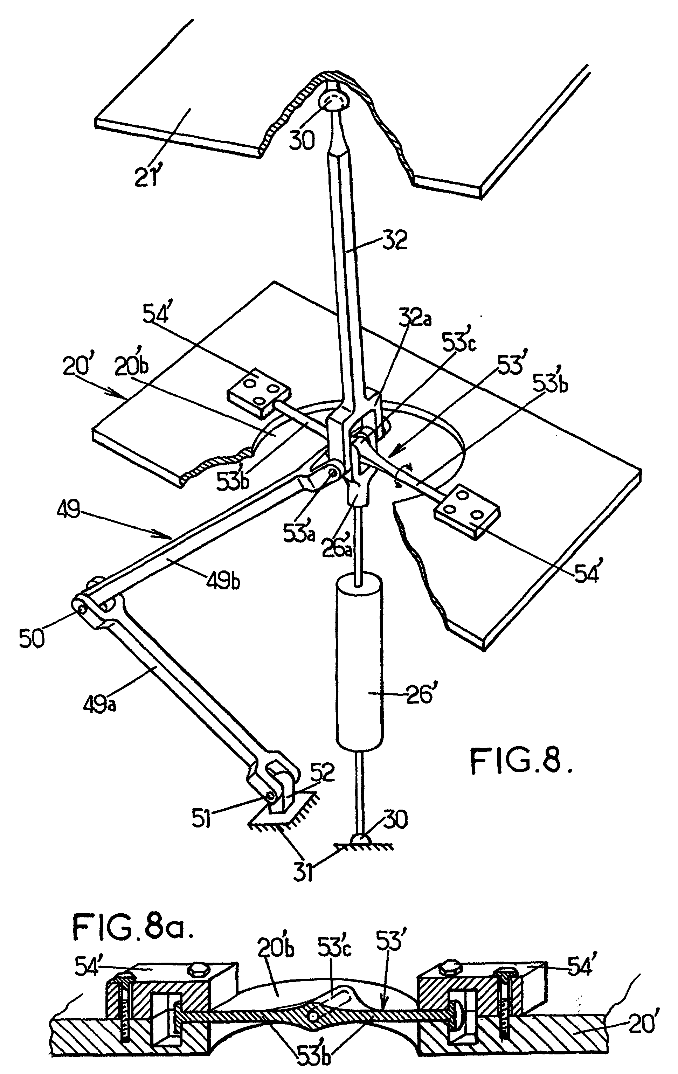

Les deux plateaux non tournants 20' et 21' peuvent être des disques annulaires pleins, sauf le plateau intérieur 20' qui présente au moins deux lumières, dont l'une 20'a pour le passage de l'unique vérin 29' articulé par rotules 30 directement sous le plateau non tournant supérieur 21' et sur la structure fixe 31. L'autre lumière 20'b du plateau 20' reçoit les articulations sur ce plateau 20' de l'un 26' des trois vérins de commande de ce plateau 20' ainsi que l'une des deux barres 32 reliant ce plateau 20' à l'autre plateau non tournant 21', sous lequel cette barre 32 s'articule par une rotule 30, et d'un compas d'anti-rotation 49', qui peut être remplacé par la structure décrite ci-dessous en référence aux figures 8 et 8a, correspondant à une variante de la figure 7 et utilisant cette barre 32 comme moyen d'anti-rotation.

Les deux autres vérins 27' et 28' de commande du plateau 20' sont articulés sur la structure fixe 31 comme sous le plateau 20' par des rotules 30, et le point d'articulation sous le plateau 20' du vérin 27' est directement sous la seconde barre 32 articulée par des rotules 30 sur ce plateau 20' et sous le plateau non tournant supérieur 21'.

La figure 8 montre que le compas d'anti-rotation 49' de la figure 3, dont la branche inférieure en fourche 49'a est pivotée par son pied dans une ferrure en "U" 52' solidaire de la structure fixe 31, peut avoir une structure et être monté comme le compas 49 de la figure 7. On retrouve que l'extrémité en fourche 26'a du vérin 26', ainsi que l'extrémité inférieure en fourche 32a de la barre 32 et la fourche de la branche supérieure 49b du compas 49 sont montées pivotantes autour d'un même axe 53'a logé dans l'alésage d'un moyeu transversal 53'c (voir figure 8a) d'un croisillon 53' suspendu au travers de la lumière 20'b du plateau 20' par ses bras longitudinaux 53'b, qui sont des bras de torsion autorisant une rotation autour de leur axe longitudinal, qui est radial par rapport à l'axe du rotor. La figure 8a montre un exemple de fixation par leurs extrémités des bras torsibles 53'b du croisillon 53' dans des logements délimités pour partie dans la face supérieure du plateau non tournant 20' et pour partie dans la face inférieure de deux supports 54' vissés sur le plateau 20' et pinçant les extrémités des bras 53'b contre ce plateau 20'.

Dans ce montage également, on fait jouer un rôle de compas anti-couple ou d'anti-rotation pour le plateau non tournant supérieur 21' à l'une des barres 32 de liaison entre les deux plateaux non tournants 20' et 21'.

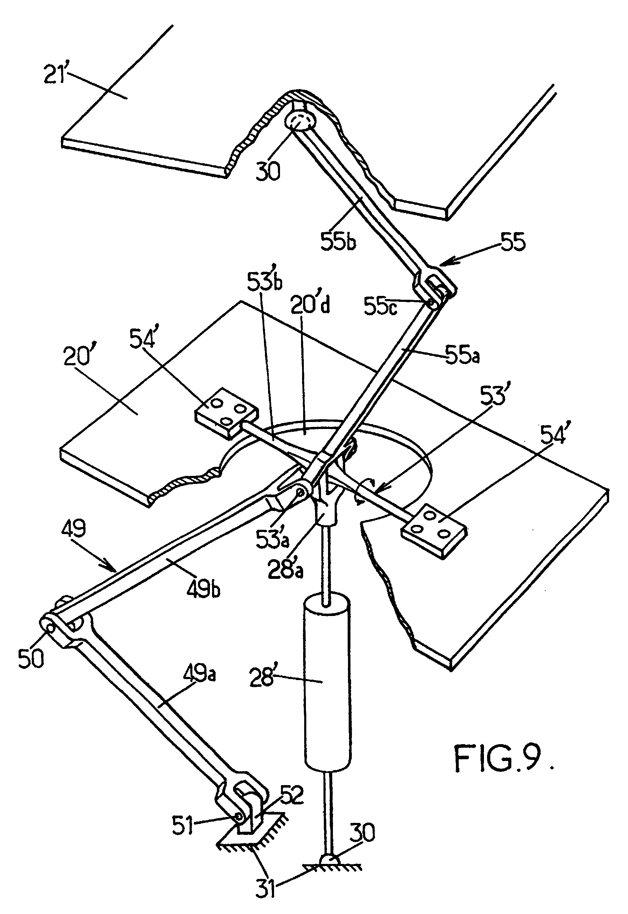

Ceci peut être évité, si l'on adopte le double compas d'anti-rotation de la figure 9 à la place du compas 49 ou 49' et d'une barre 32 des figures 3 et 8. Dans ce cas, le double compas d'anti-rotation de la figure 9 s'articule sur le plateau non tournant inférieur 20' à l'aide d'un croisillon 53', identique à celui de la figure 8 et monté de la même manière dans une ouverture 20'd du plateau 20' à la place de l'articulation 30 sur ce plateau 20' du troisième vérin 28', dont l'action n'est pas prolongée par une barre de liaison telle que 32.

Le double compas d'anti-rotation de la figure 9 comprend un compas inférieur, identique dans sa structure et son montage au compas 49 de la figure 8, et monté pivotant par la fourche de sa branche supérieure 49b autour de l'axe de pivot transversal 53'a du croisillon 53' en même temps qu'une fourche 28'a de l'extrémité supérieure de la tige du vérin 28', et que la fourche de la branche inférieure 55a d'un compas articulé supérieur 55 comprenant également une branche supérieure 55b articulée par la rotule sphérique 30 sous le plateau non tournant supérieur 21' et agencée en fourche dans laquelle pivote la branche inférieure 55a, autour d'un pivot 55c parallèle à l'axe du pivot 53'a du croisillon 53'. Le compas supérieur 55 du double compas d'anti-rotation retient le plateau non tournant supérieur 21' par rapport au plateau non tournant inférieur 20', lequel est retenu en rotation par le compas inférieur 49 le reliant à la structure fixe 31.

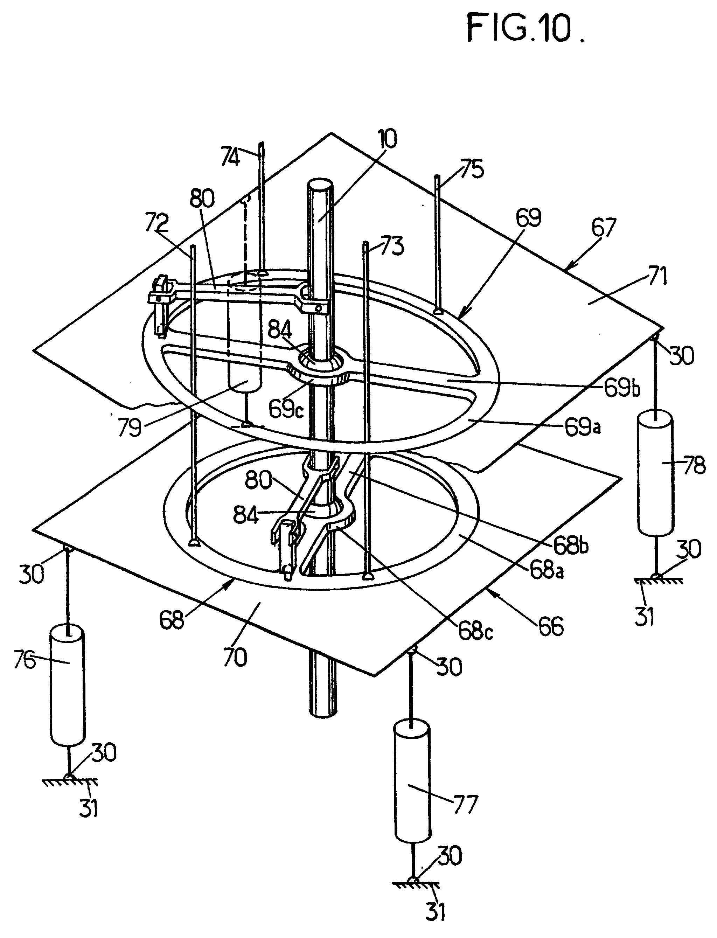

Le double compas d'anti-rotation de la figure 9 peut également être utilisé sur les dispositifs à au moins un ensemble de plateaux cycliques à centre fixé, du type décrit ci-dessous en référence aux figures 10 à 12.

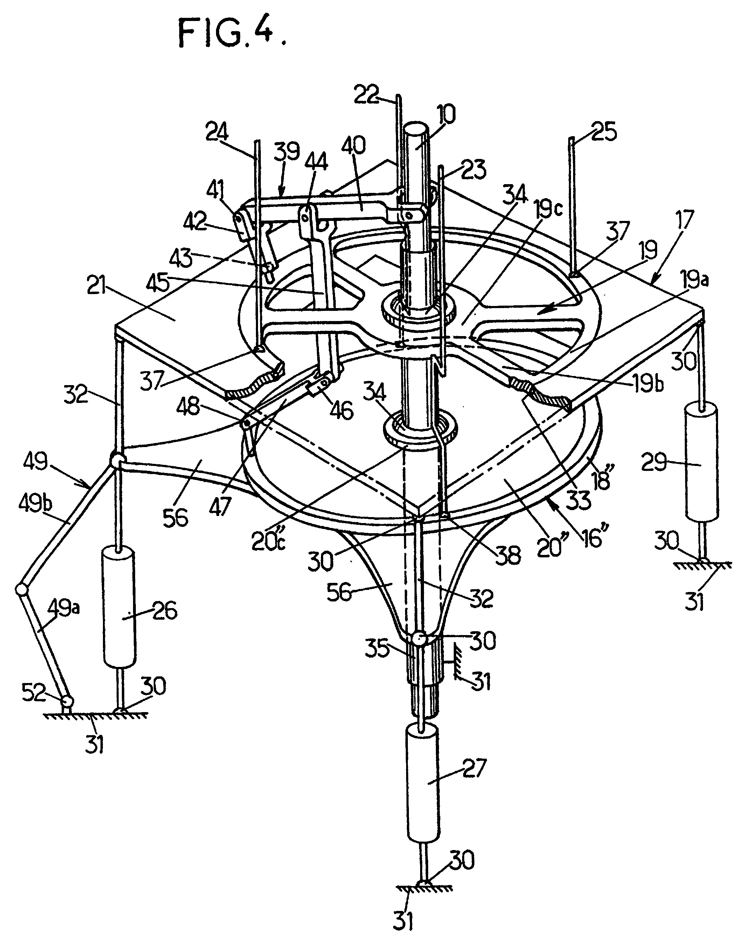

La figure 4 représente une autre variante du dispositif de la figure 1, dans laquelle l'ensemble supérieur de plateaux cycliques est identique à celui 17 de la figure 2, et comprend un plateau tournant 19 ajouré, oscillant par son moyeu 19c sur une rotule centrale 34 coulissant autour d'un manchon 35 fixe. Ce plateau rotatif 19 est articulé par des rotules 37 à deux biellettes de pas 24 et 25 diamétralement opposées et rectilignes, et monté rotatif à l'aide d'un roulement 33 à l'intérieur d'un plateau non tournant 21 commandé par un unique vérin 29, articulé par des rotules 30 entre le plateau 21 et la structure fixe 31, et par deux barres de liaison 32 le reliant au plateau non tournant de l'ensemble de plateaux cycliques inférieur 16", qui comporte un plateau tournant 18" extérieur, rotatif autour d'un plateau non tournant intérieur 20", en forme de disque plein articulé par son moyeu 20"c sur une autre rotule sphérique 34 coulissante axialement autour du manchon fixe 35.

Comme sur la figure 2, les deux autres biellettes diamétralement opposées 22 et 23 sont non rectilignes et déformées vers l'intérieur pour passer dans des lumières du plateau tournant supérieur 19, et s'articulent sur le plateau tournant inférieur 18" par des cardans 38.

Comme sur la figure 2, l'entraînement en rotation du plateau tournant supérieur interne 19 et du plateau tournant inférieur externe 18" est assuré par un double compas articulé 39 identique, dans sa structure et son montage, à celui décrit en référence à la figure 2. Ce double compas 39 est donc articulé à pivotement sur le mât rotor 10, par une rotule 43 sur le plateau tournant supérieur 19, et par une rotule 48 sur le plateau tournant inférieur 18".

Pour faciliter le montage des trois vérins d'inclinaison et translation de l'ensemble inférieur 16", et dont deux vérins seulement 26 et 27 sont visibles sur la figure 4, le plateau non tournant inférieur et interne 20" est prolongé radialement, sous le plateau tournant inférieur 18", par trois bras 56, sur l'extrémité desquels sont articulés ces trois vérins et, pour les deux bras 56 visibles sur la figure 4, également les barres 32 de liaison au plateau non tournant supérieur 21.

Comme sur la figure 2 également, les moyens d'anti-rotation des plateaux non tournants 20" et 21 comprennent un compas articulé identique au compas 49 de la figure 2 et une barre 32, selon un montage identique à celui de la figure 7, avec pour seule différence que le manchon 54 recevant le pied du pivot en "T" 53 est solidaire de l'extrémité radiale externe du bras 56 correspondant du plateau non tournant inférieur 20".

Lorsque l'un des plateaux tournants est rotatif à l'intérieur d'un plateau non tournant, comme pour les deux plateaux tournants 18 et 19 de la figure 2 et le plateau tournant supérieur 19 de la figure 4, on peut, à la place du montage oscillant du moyeu d'un plateau tournant sur une rotule centrale coulissante selon la figure 5, utiliser la variante de montage de la figure 6 qui est une vue en coupe. Dans ce montage, le manchon 35, qui ne tourne pas et entoure sans contact le mât rotor 10, rotatif autour de l'axe de rotation Oz du rotor, est lui-même entouré d'une couronne 57 pouvant coulisser axialement autour du manchon 35 fixe. En cas de besoin, on peut empêcher tout mouvement de rotation de la couronne 57 autour du manchon 35 en donnant, au moins localement, une forme non cylindrique au manchon 35, ou à l'aide d'une rainure au moins dans le manchon 35, ou encore à l'aide d'autres moyens d'anti rotation sur la couronne 57. Deux joues 58 radiales sont fixées aux extrémités axiales de la couronne 57 et sont chargées d'absorber les efforts verticaux générés par les plateaux cycliques correspondants. La rotule sphérique 34' est montée autour de la couronne 57 et entre les joues 58. Deux roulements 59, à billes ou à aiguilles cylindriques, sont interposés entre la couronne 57 et la rotule 34', et peuvent éventuellement être remplacés par un seul roulement 59. Deux roulements 60, à billes ou à rouleaux coniques, sont interposés entre la rotule sphérique 34' et les joues 59. Le moyeu 19'c d'un plateau tournant intérieur 19' présente une portée annulaire interne de forme concave et sphérique en appui contre la surface sphérique externe de la rotule 34'. Dans le sens de la rotation autour de l'axe Oz du rotor, la rotule sphérique 34' est soumise à des forces de frottement de la part du plateau tournant 19'. Elle est soumise également à un couple de frottement de la part des roulements 59 et 60. Mais comme les frottements dûs au plateau tournant 19' sont bien plus importants que ceux dûs aux roulements 59 et 60, la rotule sphérique 34' aura une vitesse de rotation presque égale à celle du plateau tournant 19'. Ceci réduit considérablement l'usure mécanique entre ces deux pièces. La différence entre les vitesses de rotation de ces deux pièces peut être entièrement annulée par un compas anti-couple articulé, de structure classique, qui peut être monté entre la rotule 34' et le plateau tournant 19'. En variante, un organe de liaison élastiquement déformable peut assurer cet accouplement homocinétique. Ce montage permet la rotation du plateau tournant 19' autour de l'axe Oz du rotor tout en acceptant les mouvements d'oscillation de ce plateau tournant 19' sur la rotule sphérique 34'.

Le dispositif selon l'invention, pour la commande individuelle du pas des pales d'un rotor à au moins quatre pales, peut comprendre également au moins deux ensembles de plateaux cycliques à plateau tournant monté rotatif sur un plateau non tournant, et inclinables dans toute direction autour de leurs centres, et dont l'un au moins des ensembles de plateaux cycliques est tel que son plateau tournant est relié par deux biellettes de pas à deux pales non diamétralement opposées du rotor, et que son plateau non tournant est articulé sur deux actionneurs de manoeuvre non diamétralement opposés, par rapport à l'axe du rotor, et qui commandent ses inclinaisons autour d'un centre d'oscillation fixé sur l'axe du rotor.

Dans cette configuration dite "à centre fixé", cet ensemble de plateaux cycliques commande deux pales, non dans le prolongement l'une de l'autre, avec seulement deux actionneurs ou vérins de manoeuvre agissant sur son plateau non tournant, et situés à la même distance R de l'axe du rotor, ces deux vérins occupant des positions relatives quelconques mais non diamétralement opposées par rapport à l'axe du rotor.

L'analyse mathématique donnée ci-dessous montre qu'avec un tel ensemble de plateaux cycliques à centre d'oscillation fixé sur l'axe du rotor et commandé par deux vérins non diamétralement opposés, il est possible de donner un mouvement quelconque à deux pales du rotor, lorsque ces pales ne sont pas dans le prolongement l'une de l'autre. En pratique, pour que le centre de l'ensemble de plateaux cycliques passe par un point fixé sur l'axe du rotor et constituant le centre d'oscillation de cet ensemble, il suffit de fixer axialement la position de la rotule sphérique centrale de cet ensemble de plateaux cycliques, par exemple en fixant cette rotule au mât rotor ou à un manchon fixe entourant ce dernier, dans le cas d'un dispositif à pleine autorité.

On suppose un ensemble de plateaux cycliques commandé par deux vérins situés à la distance R de l'axe du rotor et aux azimuts $\Psi_1$ et $\Psi_2$. Dans le repère absolu OXYZ précité lié à la structure fixe, l'équation du plan de l'ensemble de plateaux cycliques est donnée par :

$$aX + bY + z = d.$$

Le centre des plateaux est fixe, ce qui impose la valeur de d. Les deux vérins étant situés aux azimuts $\Psi_1$ et $\Psi_2$, la relation qui relie les hauteurs $h_1$ et $h_2$ des deux vérins aux coefficients de l'équation du plan des plateaux peut s'écrire :

$$(D-1) \qquad \begin{pmatrix} h_1 - d \\ \\ h_2 - d \end{pmatrix} = \begin{pmatrix} -R\cos\Psi_1 & -R\sin\Psi_1 \\ \\ -R\cos\Psi_2 & -R\sin\Psi_2 \end{pmatrix} \begin{pmatrix} a \\ \\ b \end{pmatrix}$$

On suppose que le plateau tournant de cet ensemble commande deux pales du rotor par deux biellettes de pas dont les pieds sont aux azimuts $\Phi_1$ et $\Phi_2$ dépendant du temps. La relation reliant les hauteurs $H_1$ et $H_2$ des pieds

des biellettes aux coefficients du plan des plateaux cycliques est donnée par D-2 :

$$(D\text{-}2) \quad \begin{pmatrix} H_1 - d \\ \\ H_2 - d \end{pmatrix} = \begin{pmatrix} -r\cos\Phi_1 & -r\sin\Phi_1 \\ \\ -r\cos\Phi_2 & -r\sin\Phi_2 \end{pmatrix}\begin{pmatrix} a \\ \\ b \end{pmatrix}$$

où r est le rayon du plateau tournant aux pieds des biellettes.

On peut donner des pas quelconques aux deux pales lorsque les matrices des systèmes D-1 et D-2 sont inversibles. Les déterminants D1 et D2 respectivements des systèmes D-1 et D-2 sont donnés par :

$$D_1 = -R^2 \sin(\Psi_1 - \Psi_2)$$

$$D_2 = -r^2 \sin(\Phi_1 - \Phi_2)$$

Les conditions d'existence sont donc :

1. $\Psi_2 \# \Psi_1$      et      $\Psi_2 \# \Psi_1 + \pi$
2. $\Phi_2 \# \Phi_1$      et      $\Phi_2 \# \Phi_1 + \pi$

On remarquera que la différence $\Phi_1 - \Phi_2$ ne dépend pas du temps. Un ensemble de plateaux cycliques à centre fixé peut commander deux pales én leur donnant des incidences indépendantes lorsque ces deux pales ne sont ni confondues, ce qui est évident, ni dans le prolongement l'une de l'autre. De même, les vérins de commande ne doivent pas être situés de façon symétrique par rapport à l'axe du rotor.

Les figures 10 à 12 représentent schématiquement trois exemples de dispositifs à deux ensembles de plateaux cycliques à centre fixé pour la commande individuelle du pas des pales d'un rotor quadripale d'hélicoptère.

Pour un tel rotor quadripale, deux pales voisines, à 90° l'une de l'autre, sont commandées par l'un des deux ensembles de plateaux cycliques, et les deux autres pales par l'autre ensemble.

Le dispositif de commande individuelle du pas de la figure 10 comporte deux ensembles de plateaux cycliques 66 et 67, décalés axialement l'un de l'autre, et chacun schématisé sous la forme d'un plan ou plateau, chaque ensemble 66 ou 67 commandant deux pales voisines à 90°. Chaque ensemble inférieur 66 ou supérieur 67 de plateaux cycliques est oscillant ou inclinable dans toute direction autour de son centre situé sur l'axe du mât rotor 10 par une rotule sphérique centrale dont le centre est fixé sur l'axe du mât 10. Mais, contrairement aux exemples précédents, cette rotule n'est pas translatable parallèlement à l'axe du mât 10. Chaque ensemble 66 ou 67 comprend deux plateaux annulaires, entourant le mât 10, et dont l'un est un plateau tournant inférieur 68 ou supérieur 69 monté rotatif, par exemple à l'aide d'un roulement à billes, à l'intérieur d'un plateau non tournant inférieur 70 ou supérieur 71. Chacun des deux plateaux tournants 68 et 69, ce dernier étant ajouré, comprend une jante 68a ou 69a reliée par deux rayons 68b ou 69b à un moyeu 68c ou 69c monté sur l'une de deux rotules centrales 84 fixées sur le mât rotor 10. Deux biellettes de pas 72 et 73 de deux pales voisines du rotor sont articulées sur le plateau tournant inférieur 68, et les deux biellettes de pas 74 et 75 des deux autres pales voisines sont articulées sur le plateau tournant supérieur 69.

Le diamètre du plateau tournant inférieur 68 étant légèrement plus petit que celui du plateau tournant supérieur 69, les biellettes 72 et 73 peuvent être rectilignes et traversent une lumière du plateau tournant supérieur 69 en s'articulant sur le plateau tournant inférieur 68 par des rotules, de même que les biellettes 74 et 75 sont rectilignes et articulées sur le plateau tournant supérieur 69 par des rotules.

Chaque plateau non tournant 70 ou 71 est articulé par des rotules 30 sur deux vérins 76, 77 et 78, 79, non diamétralement opposés et chacun également articulé par une rotule 30 sur la structure fixe 31 de l'hélicoptère.

Chaque plateau non tournant 70 et 71 est ainsi en appui sur deux des quatre vérins et sur la rotule centrale 84 correspondante, qui est fixe, dans cette configuration de dispositif à pleine autorité. Les vérins 76, 77 et 78, 79 de chaque plateau non tournant 70 ou 71 font un angle d'environ 120° avec leur rotule 84. Il n'y a pas de position privilégiée des vérins d'un plateau par rapport à ceux de l'autre, mais, pour une meilleure répartition des efforts, il est recommandé d'adopter un positionnement symétrique, comme sur la figure 10, de sorte que deux vérins voisins 76 et 79 ou 77 et 78, commandant des plateaux 70 et 71 différents, font un angle d'environ 60° entre eux, autour du mât rotor 10.

La différence précitée de diamètre entre les plateaux tournants 68 et 69 est facilement compensée par un ordinateur commandant les vérins 76 à 79 de positionnement des deux ensembles 66 et 67 de plateaux cycliques. Mais des plateaux tournants de même diamètre peuvent être utilisés, auquel cas, comme dans les exemples précédents, les biellettes 72 et 73 articulées au plateau tournant inférieur 68 et traversant le plateau tournant supérieur 69 seront des biellettes non rectilignes articulées au plateau 68 par des joints de cardans n'autorisant pas de rotation suivant un axe perpendiculaire à ce plateau 68.

Chaque plateau tournant 68 et 69 est entraîné en rotation par un compas articulé 80 classique, à deux branches pivotées l'une sur l'autre, et dont l'une est pivotée sur le mât rotor 10 et l'autre articulée sur le plateau tournant 68 ou 69 correspondant par une rotule sphérique simple.

De même, chacun des plateaux non tournants 70 et 71 est retenu à la structure fixe 31 par l'un respectivement de deux compas d'anti-rotation classiques (non représentés) ou éventuellement d'un double compas articulé d'anti-rotation.

Sur la figure 10, le montage de chaque plateau tournant intérieur 68 ou 69 par son moyeu 68c ou 69c sur une rotule centrale 84 peut être réalisé comme représenté sur la figure 5 décrite ci-dessus, c'est-à-dire avec un moyeu 68c ou 69c monté à l'aide d'une couronne telle que 36 et d'un roulement à billes, interposé entre moyeu et couronne, autour d'une rotule 84 elle-même montée autour d'un manchon tel que 35 entourant le mât rotor 10. Mais, pour chaque ensemble de plateaux cycliques 66 ou 67 du type à centre d'oscillation fixé sur l'axe du rotor, la rotule 84 n'est pas coulissante axialement le long du mât 10, mais fixée à ce dernier, dans une position axiale fixe.

De même, le montage de chaque plateau tournant 68 ou 69 par son moyeu 68c ou 69c sur une rotule 84 peut être réalisé comme représenté sur la figure 6, décrite ci-dessus, à l'aide d'une couronne telle que 57 autour d'un manchon 35 entourant le mât 10, la rotule 84 étant montée rotative par des roulements tels que 59 et 60 autour de cette couronne 57 qui n'est plus coulissante le long du mât 10, mais fixée en position axiale sur ce mât 10.

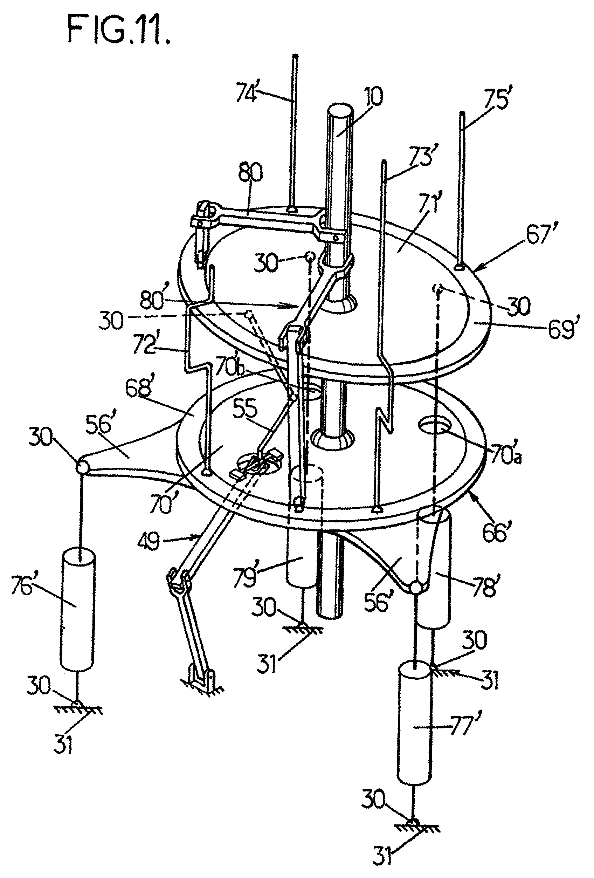

Le dispositif à deux ensembles de plateaux cycliques inférieur 66' et supérieur 67' du type à centre fixé de la figure 11 est une variante de celui de la figure 10, qui s'en distingue essentiellement par le fait que ses deux plateaux tournants inférieur 68' et supérieur 69' sont extérieurs et tournent chacun autour d'un plateau non tournant intérieur ou central respectivement inférieur 70' ou supérieur 71' correspondant.

Les biellettes 72' et 73' de deux pales voisines et reliées au plateau tournant inférieur 68' sont non rectilignes et déformées de sorte à passer à l'extérieur de l'ensemble de plateaux supérieurs 67', et ces biellettes 72' et 73' s'articulent sur le plateau tournant inférieur 68' par des joints de cardans, empêchant toute rotation autour d'un axe perpendiculaire au plateau 68', les deux autres biellettes 74' et 75', pour les deux autres pales voisines et non dans le prolongement l'une de l'autre, étant rectilignes et articulées par des rotules sur le plateau tournant supérieur 69', comme dans l'exemple de la figure 10.

Les deux vérins 76' et 77' voisins et non diamétralement opposés, qui supportent le plateau non tournant inférieur 70', sont articulés par des rotules 30 chacun entre la structure fixe 31 et l'un respectivement de deux bras 56' radiaux prolongeant le plateau non tournant 70' sous le plateau tournant inférieur 68'.

Les deux autres vérins 78' et 79', voisins et non diamétralement opposés, sont articulés par des rotules 30, chacun entre la structure fixe 31 et le plateau non tournant supérieur 71', en forme de disque annulaire, que ces vérins 78' et 79' supportent en traversant par leur tige des lumières 70'a et 70'b ménagées dans le plateau non tournant inférieur 70', également en forme de disque annulaire. Le plateau non tournant supérieur 71' est retenu via le plateau non tournant inférieur 70' par un double compas d'anti-rotation 55-49, du type représenté sur la figure 9, situé entre les deux plateaux non tournants 70' et 71', pour ne pas interférer avec la trajectoire des biellettes 72' et 73' pendant leur rotation.

L'entraînement en rotation de chacun des plateaux tournants 68' et 69' peut être assuré sans difficulté à l'aide d'un compas classique à deux branches pivotantes l'une sur l'autre, et dont l'une est articulée à pivotement sur le mât 10 et l'autre par une rotule sur le plateau tournant 68' ou 69' correspondant. Ainsi, le plateau tournant supérieur 69' peut être entraîné par un compas tournant tel que 80 sur la figure 10, mais le compas 80' d'entraînement du plateau tournant inférieur 68' présente des branches plus longues de sorte à passer au-dessus et à l'extérieur de l'ensemble de plateaux supérieurs 67', sans s'engager dans l'espace entre les deux ensembles de plateaux 66' et 67', pour ne pas interférer avec le compas d'anti-rotation 57'.

Chaque plateau non tournant 70' ou 71', en forme de disque annulaire, est monté oscillant, sans possibilité de translation axiale, sur une rotule centrale dont le centre est un point fixé sur l'axe de rotation du rotor. De préférence, cette rotule n'est pas directement solidaire du mât 10, et ne tourne pas avec lui, grâce à un montage du type de ceux représentés sur les figures 5 et 6, avec interposition d'une couronne et d'au moins un roulement, et éventuellement à l'aide d'un manchon fixe entourant le mât 10.

En l'absence de manchon mais avec une couronne telle que 57 sur la figure 6, directement fixée au mât 10 et tournant avec lui, la rotule peut être montée sur roulement autour de la couronne et le plateau non tournant peut s'articuler directement sur la rotule, avec les mêmes positions relatives que celles de la rotule 34' et du plateau 19' sur la figure 6. Mais si un manchon tel que 35 sur la figure 5 entoure le mât 10, alors chaque plateau non tournant peut directement s'articuler par son centre sur une rotule directement fixée autour du manchon.

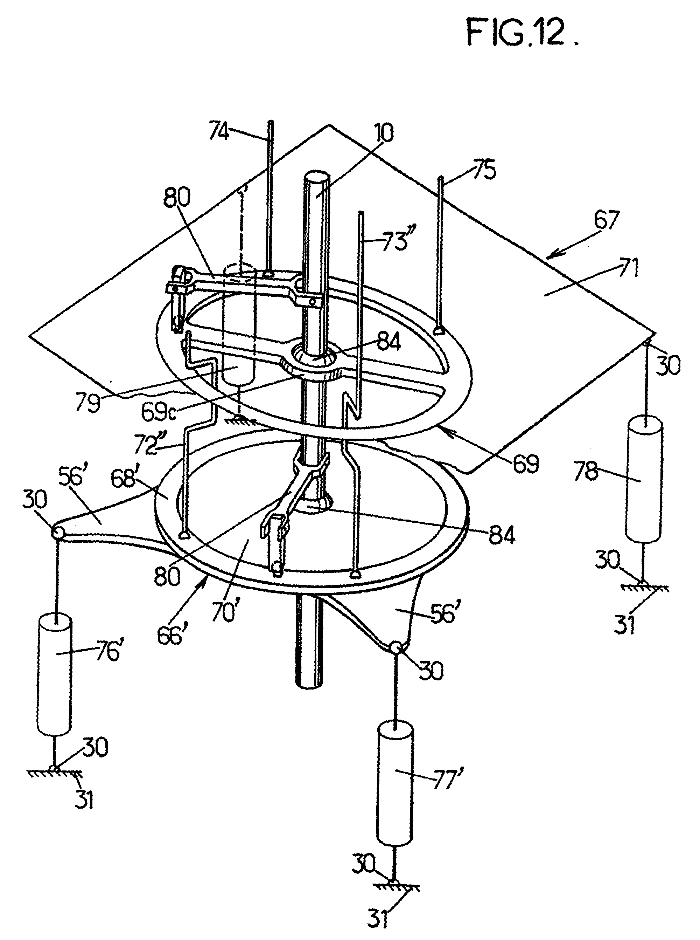

La figure 12 représente une autre variante de dispositif à deux ensembles de plateaux cycliques à centre fixé, l'ensemble supérieur étant identique à celui 67 de la figure 10 et l'ensemble inférieur étant sensiblement identique à celui 66' de la figure 11.

On retrouve donc un plateau tournant supérieur, interne et ajouré 69, entraîné en rotation par un compas articulé classique 80, le reliant au mât 10, et entraînant deux biellettes 74 et 75 rectilignes reliées à deux pales voisines, ce plateau tournant 69 étant monté oscillant par son moyeu 69c sur une rotule centrale 84 fixée sur le mât 10, sans possibilité de translation axiale, et le plateau 69 étant rotatif à l'intérieur d'un plateau non tournant supérieur et externe 71, positionné en inclinaison seulement par deux vérins 78 et 79 non diamétralement opposés et articulés chacun par des rotules 30 entre la structure fixe 31 et le plateau 71.

On retrouve également un plateau non tournant interne et inférieur 70', en forme de disque annulaire sans lumière, puisqu'il n'a pas besoin d'être traversé par les tiges des vérins 78 et 79, et monté oscillant autour d'une rotule sphérique centrale, non translatable, dont le centre est fixé sur l'axe du rotor, les inclinaisons du plateau 70' étant commandées par les deux vérins 76' et 77' non diamétralement opposés, articulés chacun par des rotules 30 entre la structure fixe 31 et l'un respectivement de deux bras radiaux 56' prolongeant le plateau non tournant 70' sous le plateau tournant inférieur et extérieur 68' correspondant.

Ce plateau tournant 68' est relié aux deux autres pales voisines du rotor par les biellettes 72" et 73", qui sont non rectilignes et déformées de sorte à traverser une lumière du plateau tournant supérieur ajouré 69.

Pour retenir chacun des plateaux non tournants 70' et 71, on peut utiliser des compas d'anti-rotation articulés classiques, non représentés, qui peuvent être montés sans difficulté. Pour retenir le plateau non tournant inférieur 70', on peut utiliser un compas tel que 57 sur la figure 11, articulé sur un troisième bras 56' de ce plateau 70' et sur une ferrure telle que 58 de la structure fixe 31. Un second compas d'anti-rotation peut être articulé, de la même manière, directement entre le plateau non tournant supérieur 71 et la structure fixe 31.

Comme aucun organe non tournant ne se trouve dans l'espace entre le plateau non tournant inférieur 70' et le plateau tournant supérieur 69, l'entraînement en rotation du plateau tournant inférieur 68' peut être assuré par un second compas tournant 80, analogue à celui entraînant le plateau tournant supérieur 69, et articulé par une rotule sur le plateau tournant inférieur 68', et à pivotement sur la partie du mât 10 qui s'étend entre les deux ensembles de plateaux 66' et 67.

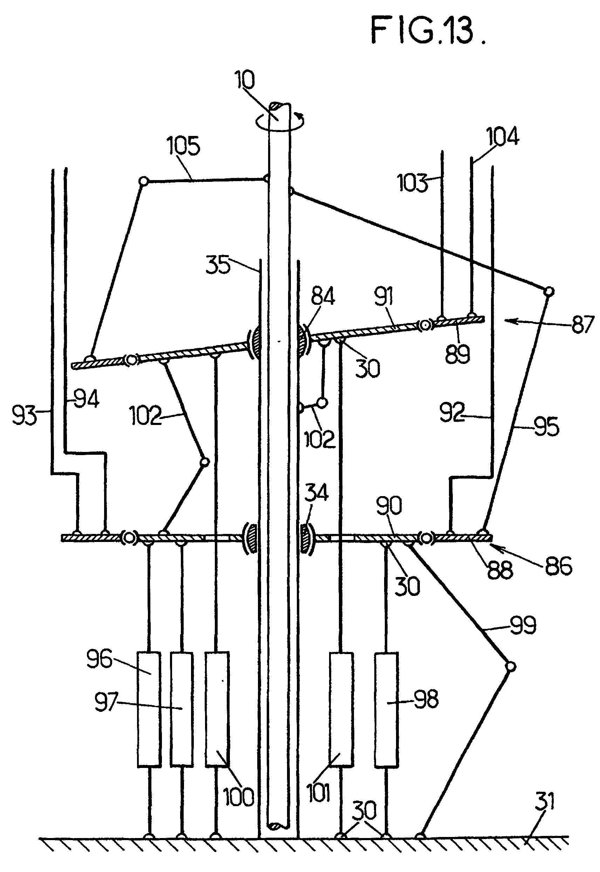

Pour un rotor à cinq pales, le dispositif de commande individuelle des pales de la figure 13 comprend deux ensembles de plateaux cycliques, dont l'un est du type connu sur les rotors tripale pour commander trois pales, et dont l'autre commande les deux autres pales du rotor. Sur un rotor à cinq pales, il n'y a que deux façons possibles de regrouper les pales en un groupe de trois pales, d'une part, et un groupe de deux pales, d'autre part. Pour l'ensemble de plateaux cycliques commandant le groupe de deux pales, ces deux pales peuvent être voisines l'une de l'autre, donc former entre elles un angle de 72°, ou être deux pales avec entre elles l'une des trois autres pales, et donc former entre elles un angle de 144°. Dans les deux cas, puisque ces deux pales ne sont pas à 180° l'une de l'autre, leur commande individuelle en pas peut être assurée à l'aide d'un ensemble de plateaux cycliques du type à centre fixé, comme décrit ci-dessus. Avec un tel ensemble de plateaux cycliques à centre fixé, il est plus facile de commander deux pales à 72°, car, parmi les deux configurations possibles, celle-ci est la plus éloignée de la configuration singulière (pales à 180°) pour laquelle l'utilisation d'un ensemble de plateaux cycliques à centre fixé est impossible.

On commande donc trois des cinq pales avec un ensemble de plateaux cycliques du type utilisé sur un rotor tripale, les deux autres pales étant commandées par un ensemble de plateaux cycliques à centre fixé, de sorte à obtenir une commande individuelle de pas des cinq pales avec cinq vérins non tournants.

Sur la figure 13, l'ensemble de plateaux cycliques 86, du type pour rotor tripale, est représenté en position inférieure et comprend un plateau non tournant interne 90 oscillant sur une rotule sphérique centrale 34 qui, comme sur les figures 2 à 4, coulisse axialement autour d'un manchon 35 fixe entourant le mât rotor 10, les oscillations et translations du plateau non tournant 90 étant commandées par trois vérins 96, 97 et 98, articulés chacun par des rotules 30 entre la structure fixe 31 de l'hélicoptère et le plateau 90, lequel est retenu par un compas d'anti-rotation 99 classique, articulé à pivotement sur la structure fixe 31 et par rotule sur le plateau 90.

L'ensemble conventionnel de plateaux cycliques 86 comprend également un plateau tournant extérieur 88 rotatif autour du plateau non tournant 90 et articulé par cardans au pied de trois biellettes de pas 92, 93 et 94 reliées à trois des cinq pales du rotor et non rectilignes pour passer à l'extérieur de l'ensemble supérieur 87 décrit ci-dessous, et le plateau tournant 88 est entraîné en rotation par un compas d'entraînement 95 classique, articulé par rotule sur le plateau tournant 88 et à pivotement sur le mât 10.

Les deux autres pales sont commandées par un ensemble de plateaux cycliques supérieurs 87, à centre fixé, comprenant un plateau non tournant interne 91 oscillant autour d'une rotule sphérique centrale 84 rigidement fixée autour du manchon 35, de sorte que le plateau non tournant 91 soit inclinable autour d'un centre d'oscillation fixé sur l'axe de rotation du rotor et correspondant au centre géométrique de la rotule fixe 84. Les oscillations du plateau non tournant 91 sont commandées par deux vérins 100 et 101, articulés chacun par des rotules 30 entre la structure fixe 31 et le plateau 91, et dont les tiges traversent des lumières ménagées dans le plateau non tournant inférieur 90. Le plateau non tournant supérieur 91 est retenu contre toute rotation par un compas d'anti-rotation classique 102 articulé au plateau non tournant et au manchon fixe 35.

L'ensemble de plateaux cycliques supérieurs 87 comprend également un plateau tournant extérieur 89, rotatif autour du plateau non tournant 91 à l'aide d'au moins un roulement, et sur lequel s'articulent deux biellettes de pas 103 et 104 reliées aux deux autres pales, par exemple voisines, du rotor, et le plateau tournant 89 est entraîné en rotation par un compas classique 105 articulé par une rotule sur le plateau 89 et à pivotement sur le mât 10.

Les ensembles de plateaux inférieur 86 et supérieur 87 sont commandés indépendamment l'un de l'autre par des vérins différents, l'ensemble 86 étant oscillant autour du mât 10 et coulissant le long de ce dernier, tandis que l'ensemble 87 est oscillant mais non coulissant.

Pour commander le pas des pales d'un rotor à sept pales, on ajoute un troisième ensemble de plateaux cycliques, qui est également du type à centre fixé et analogue à l'ensemble 87. Ce troisième ensemble comprend également un plateau tournant qui entraîne deux biellettes de pas de deux pales non dans le prolongement l'une de l'autre, et tourne sur un plateau non tournant, non translatable mais inclinable sur une rotule centrale à centre fixé sur l'axe du rotor, sous l'action de deux vérins de commande non diamétralement opposés, et dont les tiges traversent les plateaux non tournants des deux autres ensembles, si une configuration à plateaux non tournants interne est adoptée pour les trois ensembles de plateaux cycliques.

D'une manière générale, il n'est pas indispensable de placer le ou les ensembles de plateaux cycliques à centre fixé au-dessus de l'ensemble de plateaux cycliques conventionnel, et l'ordre de disposition de ces ensembles les uns au-dessus des autres résulte de considérations d'encombrement et de solidité.

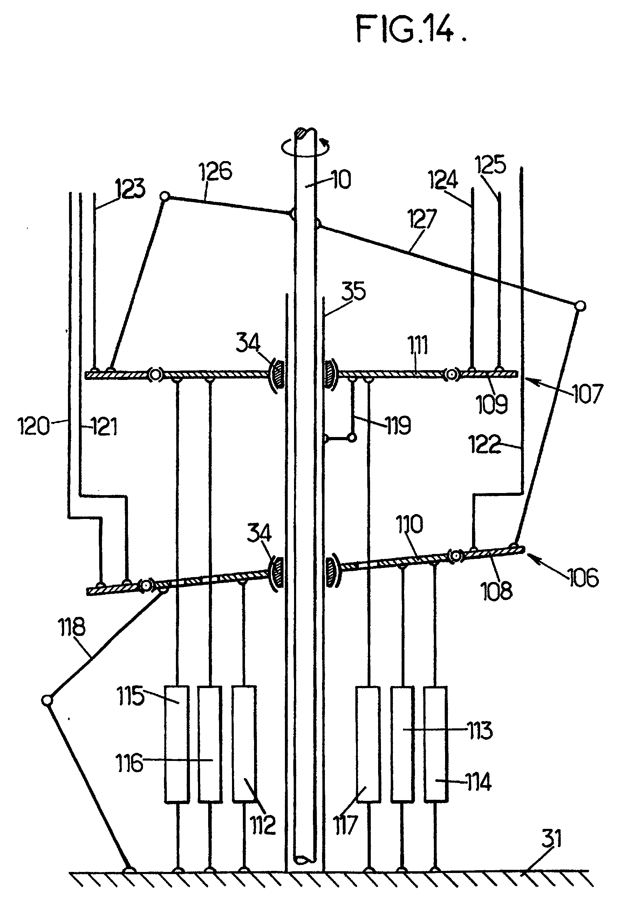

Pour un rotor à six pales, le dispositif de l'invention comprend deux ensembles de plateaux cycliques conventionnels, tels qu'utilisés sur un rotor tripale, et chacun des deux ensembles commande trois respectivement des six pales du rotor. Ces six pales ne peuvent être regroupées en deux groupes de trois pales que de trois manières différentes, les pales d'un même groupe faisant entre elles des angles de 60°, 120° ou 180°. Mais, quel que soit l'angle entre deux pales, la commande individuelle des six pales peut être assurée par un dispositif selon la figure 14, à deux ensembles de plateaux cycliques conventionnels.

Les deux ensembles de plateaux cycliques inférieur 106 et supérieur 107 de la figure 14 sont structurellement très semblables et fonctionnellement identiques, puisque chacun d'eux comprend un plateau tournant extérieur 108 ou 109 rotatif autour d'un plateau non tournant intérieur 110 ou 111, oscillant sur une rotule sphérique centrale 34 qui coulisse axialement autour d'un manchon fixe 35 entourant le mât rotor 10.

Les inclinaisons et translations de chaque ensemble 106 ou 107 sont commandées par trois vérins 112, 113 et 114 articulés chacun par des rotules entre la structure fixe 31 et le plateau non tournant 110 de l'ensemble inférieur 106, et par trois vérins 115, 116 et 117, articulés chacun par des rotules entre la structure fixe 31 et le plateau non tournant 111 de l'ensemble supérieur 107, et dont les tiges traversent le plateau non tournant 110.

Le plateau non tournant 110 est retenu par un compas d'anti-rotation 118 classique articulé entre le plateau 110 et la structure fixe 31, et l'autre plateau non tournant 111 est retenu par un compas d'anti-rotation 119, également classique, articulé par rotule sur le plateau 111 et à pivotement sur le manchon fixe 35.

Le plateau tournant 108 est articulé par cardans au pied de trois biellettes de pas non rectilignes 120, 121 et 122, et le plateau tournant 109 est articulé par rotules au pied de trois biellettes de pas rectilignes 123, 124 et 125. Chaque plateau tournant 108 et 109 commande ainsi le pas de trois respectivement des six pales du rotor. L'entraînement en rotation de chacun des plateaux tournants 108 et 109 est assuré par l'un respectivement de deux compas articulés classiques 126 et 127, articulés chacun à pivotement sur le mât 10 et par une rotule l'un 126 sur le plateau tournant supérieur 109 et l'autre 127 sur le plateau tournant inférieur 108.

Pour la commande individuelle de pas des pales d'un rotor à huit pales, le dispositif de la figure 14 est complété par un troisième ensemble de plateaux cycliques identique à l'ensemble supérieur 87 de la figure 13, et du type à centre fixé, pour commander deux pales non dans le prolongement l'une de l'autre sous l'action de deux vérins non diamétralement opposés, dont les tiges peuvent traverser les deux plateaux non tournants internes 110 et 111 des deux ensembles 106 et 107 commandant chacun trois respectivement des six autres pales du rotor.

Pour un rotor à neuf pales, le dispositif de la figure 14 est complété par un troisième ensemble de plateaux cycliques classique, du type des ensembles 106 et 107.

D'une manière générale, si le nombre b des pales du rotor est un multiple 3n de 3 (où n est un nombre entier au moins égal à 2), le dispositif comprend n ensembles de plateaux cycliques classiques tels que 106 ou 107 de la figure 14, qui sont montés axialement décalés le long du mât 10 et du manchon 35 qui l'entoure.

Si le nombre b de pales est égal à 3n+ 1, où n est un nombre entier supérieur ou égal à 1, le dispositif comprend un nombre(n - 1) d'ensembles de plateaux cycliques classiques tels que 86 sur la figure 13, ou 106 ou 107 sur la figure 14, ainsi que deux ensembles de plateaux cycliques du type à centre fixé, tel que l'ensemble 87 de la figure 13, ces deux derniers ensembles commandant chacun deux pales non dans le prolongement l'une de l'autre et étant chacun commandés par deux vérins non diamétralement opposés.

Enfin, si le nombre b de pales est égal à 3n + 2, où n est un nombre entier supérieur ou égal à 1, le dispositif comprend un nombre n d'ensembles de plateaux cycliques classiques tels que 86 sur la figure 13 ou 106 ou 107 sur la figure 14, et un unique ensemble de plateaux cycliques à centre fixé, tel que 87 sur la figure 13.

La répartition des biellettes de pas des pales entre les plateaux tournants des différents ensembles est faite en fonction de l'encombrement des différentes parties du dispositif, et en particulier des compas d'entraînement et des rayons des plateaux tournants.

Tous les dispositifs ci-dessus décrits sont des dispositifs à pleine autorité, dont tous les actionneurs de manoeuvre des différents ensembles de plateaux cycliques prennent appui sur la structure fixe de l'hélicoptère, sur laquelle ils sont articulés.

Par sécurité, il peut être envisagé de ne pas confier l'entière responsabilité de la mise en incidence des pales d'un rotor à un dispositif de commande individuelle de pas à pleine autorité, tel que décrit ci-dessus. En effet, par sa conception même, un tel dispositif est susceptible de donner aux pales des mouvements indépendants et désordonnés, en cas de panne ou de perturbation de sa commande. En outre, un tel dispositif doit être piloté par ordinateur, et les fonctions qui font passer d'une incidence désirée d'une pale au déplacement de l'actionneur de manoeuvre correspondant sont complexes et dépendent du temps par l'intermédiaire de la position azimutale des pales. Pour ces raisons, une panne peut avoir des conséquences désastreuses sur la commande individuelle de pas à pleine autorité.

Afin d'accroître la sécurité, tous ces dispositifs peuvent être réalisés selon une variante à autorité réduite, assurant une loi de commande monocyclique classique, en cas de panne de la commande individuelle des pales, grâce à un perfectionnement consistant à articuler tous les actionneurs de manoeuvre non pas sur la structure fixe de l'hélicoptère, mais sur un plateau supplémentaire, dit de sécurité, qui est non tournant et monté translatable et inclinable, autour de son centre situé sur l'axe du rotor, par des moyens de commande appropriés, notamment par trois actionneurs de sécurité interposés entre le plateau de sécurité et la structure de l'hélicoptère, sur laquelle ces actionneurs de sécurité prennent appui et sont articulés.

Dans un dispositif à autorité réduite, avec le plateau de sécurité et ses moyens de commande précités, le premier harmonique du pas cyclique est imposé par des moyens mécaniques peu sollicités, car fonctionnant en mode quasi-statique (le plateau de sécurité inclinable et translatable et ses moyens de commande), et la commande individuelle de chaque pale, assurée par l'actionneur de manoeuvre correspondant, peut intervenir avec une amplitude limitée mais avec un fonctionnement en mode dynamique pour moduler un pas monocyclique déjà établi par le plateau de sécurité. La répartition des composantes de la loi de commande est favorable à la fiabilité du dispositif.

Un tel dispositif à autorité réduite est représenté sur la figure 16, appliqué à titre d'exemple, à un dispositif à deux ensembles de plateaux cycliques du type à centre fixé, mais il est bien entendu qu'il peut être appliqué à tous les dispositifs précédemment décrits, comprenant au moins deux ensembles de plateaux cycliques du type pour pales à 180° ou du type à centre fixé et/ou classique pour rotor tripale.

Sur la figure 16, on retrouve sensiblement un dispositif de commande individuelle selon la figure 10, avec deux ensembles de plateaux cycliques inférieur 66 et supérieur 67 comprenant chacun un plateau tournant intérieur 68 ou 69 oscillant sur une rotule sphérique centrale 84' montée autour du mât rotor 10, schématisé par l'axe du rotor, de sorte que le centre de la rotule 84' soit situé sur l'axe du rotor. Chaque plateau tournant 68 ou 69 est articulé à deux biellettes de pas 72, 73 ou 74, 75 respectivement de deux pales voisines, non dans le prolongement l'une de l'autre, du rotor quadripale, et chaque plateau tournant 68 ou 69 est entraîné en rotation par un compas, non représenté, tel que 80 sur la figure 10. Chaque plateau tournant 68 et 69 est rotatif à l'intérieur d'un plateau non tournant correspondant 70 ou 71, retenu contre toute rotation autour du mât 10 par un compas d'anti-rotation classique non représenté, et les inclinaisons de chaque plateau non tournant 70 ou 71 avec le plateau tournant 68 ou 69 correspondant autour de la rotule 84' correspondante sont commandées par deux vérins non diamétralement opposés 76, 77 ou 78, 79 respectivement qui ne commandent pas de translation axiale des plateaux 70 et 71.

Tous les vérins 76 à 79 s'articulent chacun par des rotules d'une part sur le plateau non tournant 70 ou 71 correspondant, et d'autre part sur un plateau de sécurité 128, qui est interposé entre la structure fixe 31 de l'hélicoptère et les ensembles de plateaux cycliques 66 et 67 du dispositif.

Le plateau 128 est un plateau non tournant, retenu à la structure fixe 31 par un compas d'anti-rotation 129 classique, articulé par rotule sur le plateau 128 et à pivotement sur la structure 31, et le plateau 128 est inclinable dans toute direction autour de son centre situé sur l'axe du rotor et translatable parallèlement à cet axe en étant monté oscillant sur une rotule sphérique centrale 130 montée coulissante axialement autour du mât rotor 10, de toute manière appropriée.

Les oscillations du plateau 128 autour de son centre et translations du plateau 128 le long du mât rotor 10 sont commandées par tous moyens appropriés, qui peuvent être un système mécanique de positionnement commandé par le pilote ou trois actionneurs de sécurité tels que des vérins 131, 132, 133 articulés chacun par rotules sur la structure fixe 31 et sous le plateau de sécurité 128.

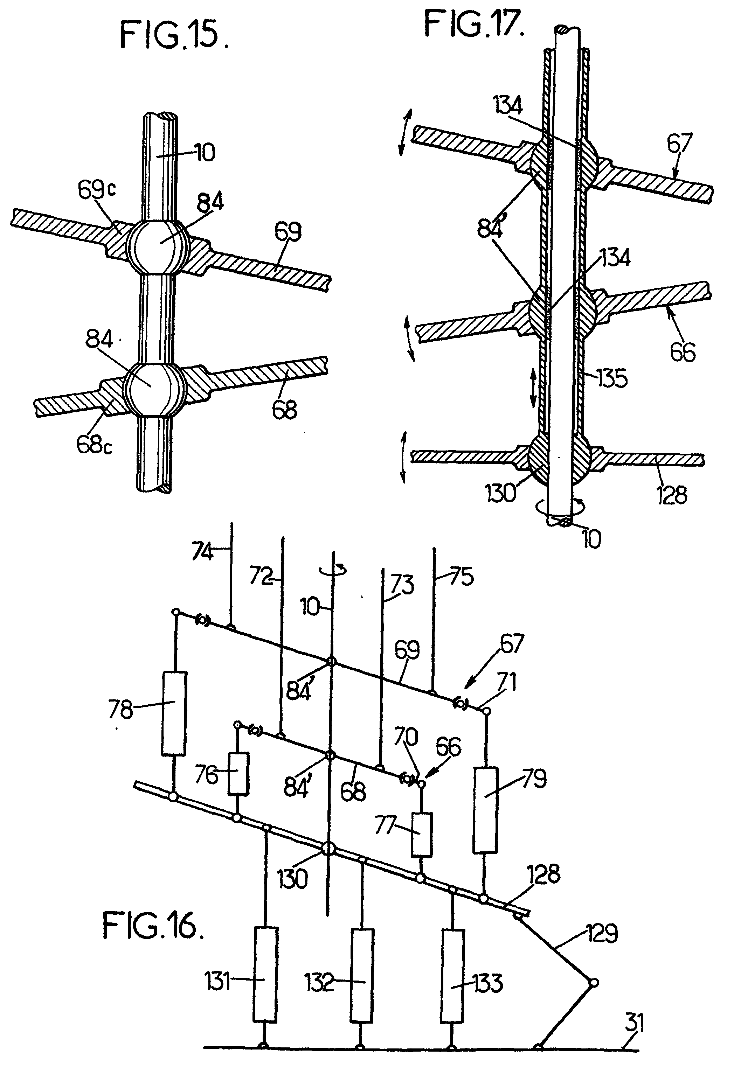

Pour que les déplacements du plateau 128 le long du mât 10, commandant le pas général, puissent être transmis par les vérins 76 à 79 aux plateaux cycliques des ensembles 66 et 67, leur rotule centrale 84' doit aussi pouvoir se déplacer axialement, et ne peut pas être une rotule fixée sur le mât 10, comme les rotules 84 du dispositif de la figure 10, selon une structure schématiquement représentée sur la figure 15. Sur cette figure 15, on retrouve les deux plateaux tournants inférieur 68 et supérieur 69 d'un dispositif à pleine autorité et à deux ensembles de plateaux cycliques à centre fixé, dont chaque plateau tournant 68 ou 69 est intérieur et monté oscillant par son moyeu 68c ou 69c sur une rotule 84 solidaire du mât rotor 10.

Dans sa configuration à autorité réduite, un dispositif avec au moins un ensemble de plateaux cycliques à centre fixé doit donc être modifié pour que la rotule centrale de chaque ensemble à centre fixé soit solidaire en translation axiale du plateau de sécurité 128.

La figure 17 représente la partie centrale, ainsi modifiée, d'un dispositif à deux ensembles à centre fixé et à autorité réduite qui peut être celui schématiquement représenté sur la figure 16. Sur la figure 17, on retrouve le plateau de sécurité non tournant 128 oscillant sur la rotule centrale 130 solidaire de l'extrémité axiale inférieure d'un manchon 135 entourant le mât 10 et monté axialement coulissant le long de ce dernier par des bagues anti-frottement 134. Les plateaux intérieurs des ensembles inférieur 66 et supérieur 67 de plateaux cycliques sont oscillants chacun sur sa rotule centrale 84' également solidaire du manchon 135. Si les plateaux intérieurs des ensembles 66 et 67 sont des plateaux non tournants, comme sur la figure 11, chacun de ces plateaux non tournants peut s'articuler directement par son moyeu sur la rotule 84' correspondante, puisque ces plateaux, ces rotules et le manchon 135 ne tournent pas. Par contre, si ces plateaux intérieurs sont des plateaux tournants, comme les plateaux 68 et 69 de la figure 10 ou de la figure 16, il est préférable d'utiliser un montage analogue à ceux des figures 5 et 6, avec couronne et roulement interposés soit entre la rotule 84' et chaque plateau tournant 68 ou 69 soit entre la rotule 84' et le manchon 135 qui la supporte dans une position axiale définie sur lui.

Dans le cas du dispositif à autorité réduite de la figure 17, on comprend que chaque ensemble de plateaux cycliques à centre fixé a le centre de sa rotule 84' non plus fixé dans une position axiale sur le mât 10, mais fixé sur le manchon coulissant 135.

Dans le cas d'un dispositif à autorité réduite avec deux ensembles de plateaux cycliques pour pales à 180° ou au moins un ensemble de plateaux cycliques classique, du type pour rotor tripale, on sait que les rotules centrales desdits ensembles sont coulissantes le long du mât rotor 10, de préférence avec des montages selon les figures 5 et 6, dans lesquels les rotules 34 et 34' coulissent déjà autour d'un manchon 35 entourant le mât rotor 10. Dans ce cas, il suffit que la rotule centrale 130 du plateau de sécurité 128 soit également montée coulissante axialement autour du manchon 35 fixe, ou encore que la rotule 130 soit fixée sur la partie inférieure du manchon 35 monté librement coulissant le long du mât 10, et non plus fixé à la structure de l'hélicoptère.

Pour les ensembles de plateaux cycliques, tels que 66 et 67 sur les figures 16 et 17, assurant la commande individuelle des pales, la position neutre des vérins de manoeuvre 76 à 79 doit correspondre à une position dans laquelle les plateaux, tels que 68, 69, 70 et 71 de ces ensembles, sont parallèles au plateau de sécurité 128.

En supposant tous les vérins de manoeuvre 76 à 79 en position neutre, le pilotage du rotor est uniquement assuré par le dispositif mécanique comprenant le plateau de sécurité 128 et ses actionneurs 131 à 133. Le plateau de sécurité 128 doit avoir le même effet sur toutes les pales, ce qui est bien le cas pour le pas général, puisqu'un déplacement du plateau de sécurité 128 parallèlement à l'axe du rotor induit le même déplacement sur les plateaux des différents ensembles de plateaux cycliques montés autour du mât 10, entre le plateau de sécurité 128 et les pales du rotor. On obtient bien un même déplacement pour toutes les biellettes de pas telles que 72 à 75, et une même variation du pas des pales si le bras de levier de la commande de pas est de longueur identique pour toutes les pales, ce qui est en général le cas pour des raisons d'équilibrage dynamique du rotor.

Par contre, il n'en est pas de même pour une commande de pas cyclique, correspondant à une inclinaison du plateau de sécurité 128. En effet, les plateaux cycliques des différents ensembles tels que 66 et 67 restent parallèles au plateau de sécurité 128, mais l'effet d'une variation d'inclinaison du plateau de sécurité 128 sur le pas de chaque pale dépend du rayon du plateau tournant sur lequel est articulée la biellette de pas de cette pale.

Pour qu'une certaine inclinaison du plateau de sécurité 128 produise le même effet sur le pas de toutes les pales du rotor, il est donc avantageux que les plateaux tournants des différents ensembles de plateaux cycliques présentent le même rayon.

Lorsque les plateaux tournants ont des rayons différents, une compensation peut être assurée en donnant des inclinaisons différentes aux ensembles de plateaux cycliques, à l'aide par exemple d'un mécanisme à levier articulé.

La figure 18 représente un exemple de mécanisme de compensation des rayons différents des plateaux tournants dans le cas d'un dispositif à autorité réduite et à deux ensembles de plateaux cycliques à centre fixé, tel que représenté sur la figure 16, et dont les rotules sont solidaires d'un manchon axialement coulissant, comme représenté sur la figure 17. On suppose que le rayon du plateau tournant 68 de l'ensemble de plateaux cycliques inférieur 66 est la moitié du rayon du plateau tournant 69 de l'ensemble de plateaux cycliques supérieur 67. Le petit rayon du plateau tournant 68 est compensé en inclinant l'ensemble inférieur 66 des deux plateaux 68 et 70 d'un angle 2a, qui est le double de l'angle a d'inclinaison des deux plateaux tournant 69 et non tournant 71 de l'ensemble supérieur 67, et qui est transmis à ces plateaux 69 et 71 à partir du plateau de sécurité 128 également incliné d'un angle a, par les vérins 78 et 79 correspondants, bloqués en position neutre, et dont un seul est représenté sur la figure 18. L'inclinaison double 2a est obtenue, pour chacun des deux vérins 76', 77' de manoeuvre de l'ensemble de plateaux inférieur 66, dont un seul est représenté sur la figure 18, et qui correspondent aux vérins 76 et 77 sur la figure 16, à l'aide d'un levier 136 articulé autour d'un point fixe 137 à l'extrémité d'un bras 138 radial et solidaire du manchon 135 coulissant axialement autour du mât 10, et qui est le manchon dont sont solidaires les rotules centrales 84' d'oscillation des plateaux cycliques des ensembles inférieur 66 et supérieur 67 et la rotule centrale 130 d'oscillation du plateau de sécurité 128. Sur la figure 18, la distance entre le point d'articulation 137 du levier 136 et l'axe du rotor est égale au tiers de la distance entre cet axe et le vérin 76' ou 77' correspondant. Les vérins 76' et 77', comme les vérins 78 et 79, sont articulés sur le plateau de sécurité 128, puisqu'il s'agit d'un dispositif à autorité réduite. Le levier 136 est, à son extrémité opposée à celle articulée au vérin 76' ou 77', articulé à un bras 139, lui-même articulé au plateau non tournant 70 de l'ensemble inférieur 66, en un point 140 situé à la même distance de l'axe du rotor que le vérin 76'ou 77', mais diamétralement opposé, de sorte que les plateaux 68 et 70 de l'ensemble inférieur 66 s'inclinent deux fois plus que le plateau de sécurité 128.

Un déplacement du plateau de sécurité 128 parallèlement à l'axe du rotor ne modifie pas l'inclinaison des ensembles de plateaux 66 et 67, et ne modifie donc pas le pas cyclique, mais seulement le pas général, et de la même façon pour toutes les pales. Sur le dispositif de la figure 18, en cas de panne des vérins 76', 77' et 78, 79 de manoeuvre des ensembles de plateaux 66 et 67, et lorsque ces vérins sont bloqués en position neutre, on se retrouve dans la configuration d'une commande monocyclique classique, bien que les plateaux tournants 68 et 69 présentent des diamètres différents.

Mais il faut verrouiller les vérins de manoeuvre des plateaux cycliques en position neutre, ce qui correspond à des plateaux cycliques 68, 70 et 69, 71 horizontaux, c'est-à-dire perpendiculaires à l'axe du rotor, lorsque le plateau de sécurité 128 est lui-même perpendiculaire à cet axe, et donc horizontal.

Les vérins de manoeuvre, tels que 76, 77, 78 et 79 sur la figure 16 qui assurent la commande individuelle des pas, sont des vérins hydrauliques alimentés sans difficulté, puisque montés en repère non tournant, à partir d'une centrale hydraulique de l'hélicoptère fournissant une pression élevée. Pour qu'une rupture d'une conduite hydraulique ou une panne de la centrale hydraulique d'alimentation des vérins de manoeuvre ne mette pas en danger la sécurité de l'hélicoptère, il est prévu un système pouvant verrouiller la commande individuelle des pales en position neutre.

Ce système de verrouillage peut être couplé à la commande hydraulique des vérins de manoeuvre, de la façon suivante : si la pression hydraulique dans le circuit d'alimentation de ces vérins descend au-dessous d'un certain seuil, l'ordinateur qui commande ces vérins, qui sont des vérins de servo-commande électro-hydrauliques, tire profit de la pression hydraulique résiduelle pour ramener les vérins en position neutre, par une procédure d'urgence, à la suite de quoi les vérins sont verrouillés dans cette position neutre.

En cas de perte de pression hydraulique trop brutale, pour laquelle la procédure d'urgence précitée s'avère insuffisante pour ramener les vérins en position neutre, un dispositif hydro-mécanique agencé sur chaque vérin de manoeuvre permet de ramener progressivement ce vérin en position neutre et de le verrouiller dans cette position. Ce dispositif hydro-mécanique de verrouillage tire l'énergie nécessaire à son fonctionnement des mouvements du plateau de sécurité 128 ainsi que des variations aléatoires, dues aux turbulences d'origine aérodynamiques, du pas des pales dont les biellettes de pas sont reliées à l'ensemble de plateaux cycliques commandé par le vérin de manoeuvre correspondant.

La figure 19 représente schématiquement un vérin de manoeuvre équipé d'un exemple d'un tel dispositif hydro-mécanique de verrouillage en position neutre de ce vérin.

Sur la figure 19 est schématiquement représenté l'un des vérins de manoeuvre, tel que 76, du dispositif de la figure 16. Ce vérin 76 comprend un cylindre 141 et une tige 142 solidaire d'un piston coulissant dans le cylindre 141, et dont les déplacements dans ce dernier sont commandés par admission d'huile hydraulique sous haute pression d'un côté ou de l'autre du piston, et retour de l'huile hydraulique du côté opposé du piston vers un réservoir, par des conduites respectivement d'alimentation 143 et de retour 144, afin de commander les déplacements axiaux relatifs de la tige 142 et du cylindre 141, dont l'un est articulé sur le plateau de sécurité 128 et l'autre sur le plateau non tournant tel que 70, dans le sens de l'augmentation ou de la diminution de la distance séparant les deux rotules d'articulation des extrémités du vérin 76. Le dispositif de verrouillage comprend deux petits vérins de verrouillage 145 et 146 solidaires du cylindre 141. Chaque vérin de verrouillage 145 ou 146 comprend un cylindre 147 alimenté par un canal 148 relié à la même source de pression que le vérin 76, et donc alimenté en huile sous haute pression entrant dans le cylindre 141. La prise de pression, pour les canaux 148, peut être assurée dans le cylindre 141 ou à l'entrée de la conduite d'alimentation 143 dans ce dernier. La pression hydraulique admise dans le cylindre 147 par le canal 148 s'exerce sur un piston 149, monté coulissant dans le cylindre 147, et à l'encontre d'un ressort de rappel 150 également logé dans le cylindre 147. Chaque piston 149 est solidaire d'une tige 151 traversant le cylindre 147 et dont l'extrémité externe à ce dernier porte un biseau de verrouillage 152 ou 153, coopérant chacun avec l'une respectivement de deux crémaillères de verrouillage 154 et 155, usinées sur les côtés opposés d'une partie de la tige 142, et axialement décalées l'une de l'autre sur cette partie de tige 142. Chaque crémaillère 154 et 155 présente des dents de section triangulaire dont un côté est aménagé en rampe inclinée sur la direction axiale de la tige 142, et dont l'autre côté est une butée perpendiculaire à cette direction, et chaque crémaillère 154 ou 155 coopère avec un biseau de forme complémentaire 152 ou 153 pour permettre le déplacement de la tige 142 dans l'un seulement et respectivement des deux sens de manoeuvre, et pour bloquer le déplacement dans le sens opposé.

Sur la figure 19, la coopération du biseau 153 du vérin de verrouillage supérieur 146 avec la crémaillère de verrouillage supérieure 155 empêche le déplacement de la tige 142 de la droite vers la gauche, mais permet ce déplacement de la gauche vers la droite par la coopération des rampes des dents de la crémaillère 155 qui repoussent le biseau 153 vers l'intérieur du cylindre 147, contre le ressort 150, tandis que le biseau 152 du vérin de verrouillage inférieur 145 et la crémaillère de verrouillage inférieure 154 sont agencés de sorte à permettre les déplacements de la tige 142 de la droite vers la gauche et à bloquer la tige 142 dans ses mouvements de la gauche vers la droite. De plus, le décalage axial des crémaillères 154 et 155 permet pour chacune d'elles un déplacement maximum de la tige 142 dans le sens autorisé par cette crémaillère jusqu'à un point neutre défini par les extrémités adjacentes des crémaillères 154 et 155, qui se correspondent et se recouvrent de la valeur d'une dent.

Lorsque la pression d'alimentation du vérin 76 est élevée, comme cette pression est admise par les canaux 148 dans les cyclindres 147, les pistons 149 compriment les ressorts 150 et les biseaux 152 et 153 sont écartés de la tige 142 et des crémaillères 154 et 155. Lorsque la pression à l'entrée du vérin 76 diminue, les ressorts 150 repoussent les pistons 149, et les biseaux 152 et 153 viennent en contact avec la tige 142, de sorte que l'un d'entre eux, en regard d'une crémaillère 154 ou 155, s'engage entre deux dents de cette crémaillère.

Lorsque le point "0" de la graduation portée sur la tige 142 vient à la hauteur des deux biseaux 152 et 153, la tige 142 et le piston dans le cylindre 141 du vérin 76 sont en position neutre. Sur la figure 19, le vérin 76 est représenté dans une position dans laquelle sa tige 142 est enfoncée dans le cylindre 141, donc déplacée vers la gauche par rapport à la position neutre. La chute de la pression d'alimentation du vérin 76 entraîne l'engagement du biseau 153 dans la crémaillère 155 sous la poussée du ressort 150. La tige 142 ne peut se déplacer davantage vers la gauche sur la figure 19, mais elle est cependant libre de se déplacer vers la droite, tant que l'autre biseau 152 du vérin de verrouillage 145 ne devient pas actif à son tour en s'engageant dans la crémaillère 154. Ceci se produit lorsque la tige 142 arrive en position neutre, dans laquelle elle reste ensuite bloquée.

Si, initialement, la tige 142 était sortie du cylindre 141, donc déplacée vers la droite sur la figure 19, lorsque la panne d'alimentation est survenue, le biseau 153 est inactif car il ne se trouve pas en regard de sa crémaillère 155, et par contre, le biseau 152 est engagé entre deux dents de la crémaillère 154, de sorte que la tige 142 ne peut que se déplacer vers la gauche. Ce mouvement vers la gauche se produira tant que le biseau 153 ne deviendra pas actif, ce qui sera le cas dès que la tige 142 atteindra la position neutre, dans laquelle le biseau 153 s'engagera dans l'extrémité de la crémaillère 155 située à gauche sur la figure 19.

Ainsi, en cas de panne dans l'alimentation hydraulique sous pression, tout effort de traction ou compression s'exerçant sur la tige 142 du vérin 76 tend à ramener cette tige 142 progressivement à la position neutre, dans laquelle le vérin 76 reste ensuite verrouillé.

Dans ce montage, les vérins de verrouillage 145 et 146 peuvent être considérés comme de simples dispositifs de mesure de la pression hydraulique à l'entrée du vérin 76. Ces vérins de verrouillage 145 et 146 peuvent aussi être chargés d'actionner un contact électrique, par leur équipage mobile 149-150-151 ou 152, si la pression hydraulique descend en-dessous d'un seuil critique. Si le contact électrique est relié à l'ordinateur de commande du vérin 76, la procédure d'urgence ci-dessus mentionnée peut être déclenchée.

Tous les dispositifs à plateaux cycliques multiples décrits ci-dessus permettent de commander des pales au moyen de vérins classiques, montés en repère non tournant, et en nombre égal à celui des pales du rotor.

Avec deux ensembles de plateaux cycliques, on peut assurer une commande individuelle des pales de rotors principaux d'hélicoptères à quatre, cinq ou six pales, c'est-à-dire la très grande majorité des hélicoptères actuellement en service.

De plus, en cas de panne du circuit hydraulique d'alimentation des vérins de la commande individuelle de pas, ces vérins peuvent être ramenés progressivement en position neutre, et verrouillés dans cette position, à l'aide d'un dispositif hydro-mécanique simple, tel que celui de la figure 19, de sorte que le dispositif de commande se retrouve dans une configuration de commande monocyclique classique.

Les dispositifs à plateaux cycliques multiples mettent en oeuvre des moyens de liaison situés entre des plateaux tournants ou non tournants (dont le plateau de sécurité éventuellement), et respectivement l'axe rotor ou une structure non tournante ou fixe.

Un exemple de réalisation d'un double compas, appliqué à un dispositif à deux ensembles de plateaux cycliques, est représenté sur la figure 9. Ce double compas peut être facilement adapté pour des applications à multiples plateaux. Chaque plateau supplémentaire est alors équipé d'un croisillon 53', articulé, d'une part, avec le plateau et, d'autre part, avec un compas 49 dont l'autre extrémité est articulée sur le croisillon du plateau cyclique voisin. La fonction du compas, c'est-à-dire la transmission d'un gisement entre deux structures mobiles l'une par rapport à l'autre, est ainsi réalisée, ce quelle que soit l'inclinaison de chaque plateau concerné.

Tous les dispositifs de commande décrits, tant en configuration à pleine autorité qu'en configuration à autorité réduite, peuvent être réalisés à l'aide de moyens classiques, d'une technologie éprouvée, pour ce qui est des plateaux cycliques, ou suffisamment développée, pour ce qui est des vérins de manoeuvre à fréquence de commande suffisamment élevée.

## Revendications

1. Dispositif de commande individuelle des pales d'un rotor à au moins quatre pales (11, 12, 13, 14), pour voilure tournante d'aéronef, comprenant un premier ensemble (16) de plateaux cycliques, ledit ensemble de plateaux cycliques comportant un plateau tournant (18) ayant un centre de rotation sur l'axe de rotation (Oz) du rotor et rotatif sur un plateau non tournant (20) ayant un centre d'oscillation sur l'axe (Oz) du rotor confondu avec le centre de rotation du plateau tournant et définissant le centre dudit ensemble de plateaux cycliques, ledit premier ensemble (16) étant inclinable dans toutes directions autour de son centre (O'), sous l'action d'au moins deux actionneurs de manoeuvre (26, 28) interposés entre une structure non tournante (31) de l'aéronef et ledit premier ensemble (16), en étant articulés chacun sur le plateau non tournant (20), retenu par des moyens (49) de liaison à ladite structure non tournante (31), tandis que le plateau tournant (18) est entraîné en rotation par des moyens (39) de liaison avec le rotor autour de l'axe (Oz) du rotor, et relié à chacune d'au moins deux pales (13, 14) du rotor par une biellette de pas (22, 23) respective, le dispositif comportant au moins autant d'actionneurs de manoeuvre (26, 27, 28, 29) que le rotor comporte de pales (11, 12, 13, 14), et tous les actionneurs étant non tournants, **caractérisé en ce qu'**il comprend au moins un second ensemble (17) de plateaux cycliques dont le centre (O) est également situé sur l'axe (Oz) du rotor, ledit second ensemble (17) étant inclinable dans toutes directions autour de son centre (O), sous l'action d'au moins un autre actionneur de manoeuvre (29) interposé entre une structure non tournante (31, 20) et ledit second ensemble (17), dont le plateau non tournant (21) est articulé sur ledit autre actionneur (29) et est retenu par des moyens (49-32) de liaison à une structure non tournante (31, 20), tandis que le plateau tournant (19) dudit second ensemble (17) est également entraîné en rotation par des moyens (39) de liaison avec le rotor, autour de l'axe (Oz) de ce dernier, et est relié à chacune d'au moins une autre pale (11, 12) du rotor par une biellette de pas (24, 25) respective.

2. Dispositif selon la revendication 1, pour un rotor quadripale, dont les pales sont groupées en deux paires de pales (11,12 - 13,14) diamétralement opposées par rapport à l'axe (Oz) du rotor, **caractérisé en ce que** les biellettes de pas (22, 23) de deux pales (13, 14) diamétralement opposées sont articulées (38) sur le plateau tournant (18) du premier ensemble (16) de plateaux cycliques, dont le centre est translatable selon l'axe (Oz) du rotor, et dont le plateau non tournant (20) est articulé sur trois actionneurs de manoeuvre (26, 27, 28) commandant les translations et inclinaisons dudit premier ensemble (16) de plateaux cycliques, les biellettes (24, 25) des deux autres pales (11, 12) diamétralement opposées étant articulées (37) sur le plateau tournant (19) du second ensemble (17) de plateaux cycliques dont le centre est décalé axialement par rapport à celui du premier ensemble de plateaux cycliques, et translatable selon l'axe (Oz) du rotor, et dont le plateau non tournant (21) est articulé (30) sur un quatrième actionneur de manoeuvre (29) et relié au plateau non tournant (20) du premier ensemble (16) de plateaux cycliques par deux barres (32) rigides de longueur constante, transmettant chacune au plateau non tournant (21) dudit second ensemble (17) les déplacements transmis au plateau non tournant (20) dudit premier ensemble (16) par chacun respectivement des deux actionneurs (26, 27) articulés sur ce dernier.

3. Dispositif selon la revendication 2, **caractérisé en ce que** les deux barres rigides (32) constituent des moyens de liaison s'opposant à la rotation du plateau non tournant (21) du second ensemble (17) de plateaux cycliques.

4. Dispositif selon la revendication 1, pour un rotor quadripale, **caractérisé en ce que**, sur le plateau tournant (68, 69) de chacun de deux ensembles (66, 67) de plateaux cycliques, sont articulées respectivement deux biellettes de pas (72,73 - 74,75) de deux pales non diamétralement opposées, tandis que le plateau non tournant (70, 71) de chacun des deux ensembles (66, 67) de plateaux cycliques est articulé (30) sur respectivement deux actionneurs de manoeuvre (76,77 - 78,79) non diamétralement opposés, commandant uniquement les inclinaisons du plateau non tournant (70, 71) correspondant autour du centre d'oscillation correspondant, les centres des deux ensembles de plateaux cycliques ne se translatant pas sur l'axe (Oz) par rapport à la structure non tournante (31).

5. Dispositif selon la revendication 1, pour un rotor dont le nombre b de pales est égal à 3n + 1, où n est un nombre entier supérieur ou égal à 1, **caractérisé en ce qu'**il comprend un nombre (n-1) d'ensembles (86) de plateaux cycliques, dont chaque centre est translatable selon l'axe (Oz) du rotor, et dont le plateau tournant (88) de chacun d'eux est articulé à trois biellettes de pas (92, 93, 94) respectives des pales, et dont le plateau non tournant (90) de chacun d'eux est articulé sur et déplacé par trois actionneurs de manoeuvre (96, 97, 98) respectifs, ainsi que deux autres ensembles de plateaux cycliques (tels que 87), le plateau tournant (89) de chacun desdits deux autres ensembles étant articulé à deux biellettes de pas (103, 104) respectives de deux pales non diamétralement opposées, et le plateau non tournant (91) de chacun desdits deux autres ensembles étant articulé sur deux actionneurs de manoeuvre (100, 101) respectifs non diamétralement opposés, commandant uniquement les inclinaisons du plateau non tournant (91) correspondant autour du centre d'oscillation correspondant.

6. Dispositif selon la revendication 1, pour un rotor dont le nombre b de pales est égal à 3n + 2, où n est un nombre entier supérieur ou égal à 1, **caractérisé en ce qu'**il comprend un nombre n d'ensembles (86) de plateaux cycliques, dont chaque centre est translatable selon l'axe (Oz) du rotor, et dont le plateau tournant (88) de chacun d'eux est articulé à trois biellettes de pas (92, 93, 94) respectives des pales, et dont le plateau non tournant (90) de chacun d'eux est articulé sur et déplacé par trois actionneurs de manoeuvre (96, 97, 98) respectifs, ainsi qu'un autre ensemble (87) de plateaux cycliques, dont le plateau tournant (89) est articulé à deux biellettes de pas (103, 104) respectives de deux pales non diamétralement opposées, et dont le plateau non tournant (91) est articulé sur deux actionneurs de manoeuvre (100, 101) respectifs non diamétralement opposés, commandant uniquement les inclinaisons dudit autre ensemble (87) autour du centre d'oscillation correspondant.

7. Dispositif selon la revendication 1, pour un rotor dont le nombre b de pales est un multiple 3n de 3, n étant un nombre entier supérieur ou égal à 2, **caractérisé en ce qu'**il comprend un nombre n d'ensembles (106, 107) de plateaux cycliques, dont chaque centre est translatable selon l'axe (Oz) du rotor, et dont le plateau tournant (108, 109) de chacun d'eux est articulé à trois biellettes de pas (120,121,122 - 123,124,125) respectives des pales, et dont le plateau non tournant (110, 111) de chacun d'eux est articulé sur et déplacé par trois actionneurs de manoeuvre respectifs (112,113,114 - 115,116,117).

8. Dispositif selon l'une quelconque des revendications 1 à 7, **caractérisé en ce que** chaque actionneur de manoeuvre (76, 77, 78, 79) est également articulé sur un plateau de sécurité (128) non tournant, interposé entre les ensembles (66, 67) de plateaux cycliques et la structure fixe (31) de l'aéronef, à laquelle le plateau de sécurité (128) est relié par des moyens d'anti-rotation (129), le plateau de sécurité (128) étant translatable selon l'axe (Oz) du rotor et inclinable dans toutes les directions autour de son centre (130) sous l'action de moyens de commande (131, 132, 133) de position, interposés entre le plateau de sécurité (128) et la structure fixe (31), et de préférence comprenant trois actionneurs de sécurité, articulés (30) chacun d'une part sur le plateau de sécurité (128) et d'autre part sur ladite structure fixe (31).

9. Dispositif selon la revendication 8, **caractérisé en ce qu'**il comprend de plus des moyens de verrouillage (145, 146) de la commande individuelle de pas de chaque pale, lesdits moyens de verrouillage étant portés par lesdits actionneurs de manoeuvre (76), et permettant une commande monocyclique des pales par la commande des translations et inclinaisons du plateau de sécurité (128).

10. Dispositif selon la revendication 9, **caractérisé en ce que** les moyens de verrouillage comprennent, pour chaque actionneur de manoeuvre (76), un dispositif de verrouillage (145, 146, 154, 155) dudit actionneur de manoeuvre (76) en position neutre.

11. Dispositif selon la revendication 10, **caractérisé en ce que** chaque dispositif de verrouillage comprend deux crémaillères (154, 155) dont chacune est destinée à bloquer l'actionneur de manoeuvre (76) correspondant dans l'un respectivement des deux sens de manoeuvre dudit actionneur (76).

12. Dispositif selon l'une quelconque des revendications 8 à 11, **caractérisé en ce que** le plateau de sécurité (128) est inclinable sur une rotule centrale (130) montée coulissante axialement autour du mât rotor (10) ou d'un manchon (35, 135) entourant le mât rotor (10).

13. Dispositif selon la revendication 12, tel que l'un au moins des ensembles (66, 67) à plateaux cycliques a son plateau non tournant (70, 71) uniquement incliné par deux actionneurs de manoeuvre (76,77 - 78,79) correspondants autour du centre d'oscillation correspondant sur l'axe du rotor, **caractérisé en ce que** ledit centre d'oscillation est défini sur un manchon (135) monté coulissant axialement autour du mât rotor (10), et portant la rotule centrale (130) du plateau de sécurité (128).

14. Dispositif selon l'une quelconque des revendications 8 à 13, dont les plateaux tournants (68, 69) de deux ensembles (66, 67) de plateaux cycliques voisins ont des diamètres différents, **caractérisé en ce qu'**au moins un mécanisme non tournant à leviers articulés (136, 139) est interposé entre un actionneur (76', 77') de manoeuvre du plateau non tournant (70) de l'un (66) des deux ensembles (66, 67) et ledit plateau non tournant (70) de sorte à donner une inclinaison à l'un (66) des deux ensembles qui soit différente de celle du plateau de sécurité (128), de manière à compenser les différences de diamètre entre les plateaux tournants (68, 69).

**15.** Dispositif selon la revendication 14, tel que rattaché à la revendication 12 ou 13, **caractérisé en ce que** le mécanisme à leviers articulés (136, 139) est articulé sur un point fixe (137) du manchon (135) coulissant axialement autour du mât rotor (10).

**16.** Dispositif selon l'une quelconque des revendications 1 à 15, **caractérisé en ce que** les plateaux tournants (18, 19) d'ensembles (16, 17) de plateaux cycliques le long de l'axe (Oz) du rotor sont tous montés rotatifs à l'intérieur des plateaux non tournants respectifs (20, 21), et **en ce qu'**au moins une biellette de pas (22, 23) traverse une lumière aménagée dans chaque plateau tournant (19) des ensembles (17) de plateaux cycliques interposés entre le plateau tournant (18) sur lequel ladite biellette (22, 23) est articulée et les pales que ledit plateau tournant (18) commande.

**17.** Dispositif selon l'une quelconque des revendications 1 à 15, **caractérisé en ce que** le plateau tournant (18") de l'un (16") de deux ensembles (16", 17) de plateaux cycliques voisins le long de l'axe (Oz) du rotor et interposé entre l'autre ensemble (17) de plateaux cycliques et la structure fixe (31) de l'aéronef est monté rotatif autour du plateau non tournant (20") correspondant, alors que le plateau tournant (19) dudit autre ensemble (17) de plateaux cycliques est monté rotatif à l'intérieur du plateau non tournant (21) correspondant, et **en ce que** les biellettes de pas (22, 23), articulées (38) au plateau tournant (18") de celui (16") des ensembles de plateaux cycliques qui est interposé axialement entre l'autre ensemble (17) et la structure (31) de l'aéronef, traversent des lumières dans le plateau tournant (19) de l'autre ensemble (17).

**18.** Dispositif selon l'une quelconque des revendications 1 à 15, **caractérisé en ce que** les plateaux tournants (18', 19') d'ensembles (16', 17') de plateaux cycliques le long de l'axe (Oz) du rotor sont tous montés rotatifs à l'extérieur des plateaux non tournants (20', 21') respectifs, et **en ce qu'**au moins un actionneur (29') traverse une lumière (20'a) aménagée dans chaque plateau non tournant (20') des ensembles (16') de plateaux cycliques interposés entre le plateau non tournant (21') sur lequel ledit actionneur (29') est articulé et une structure non tournante (31).

**19.** Dispositif selon l'une quelconque des revendications 1 à 18, **caractérisé en ce que** l'une au moins des biellettes de pas (22, 23) n'est pas rectiligne et est articulée sur le plateau tournant (18) correspondant par des moyens d'articulation (38) interdisant la rotation de ladite biellette (22, 23) autour d'un axe perpendiculaire audit plateau tournant (18), tels que des moyens d'articulation par cardans.

**20.** Dispositif selon l'une quelconque des revendications 1 à 19, **caractérisé en ce que** deux ensembles (16,17 - 16', 17')de plateaux cycliques voisins le long de l'axe du rotor ont leurs plateaux non tournants (20', 21') reliés l'un à l'autre et à la structure fixe (31) de l'aéronef par au moins un double compas (49-55) articulé d'anti-rotation et/ou leurs plateaux tournants (18, 19) reliés l'un à l'autre et au rotor par au moins un double compas (39) articulé d'entraînement en rotation.

**Patentansprüche**

**1.** Vorrichtung zur individuellen Steuerung der Blätter eines Rotors mit wenigstens vier Blättern (11, 12, 13, 14) für Luftfahrzeug-Drehflügel, die eine erste Taumelscheiben-Einheit (16) umfasst, wobei diese Taumelscheiben-Einheit eine drehende Scheibe (18) enthält, die ein Drehzentrum auf der Rotationsachse (Oz) des Rotors hat und auf einer nicht drehenden Scheibe (20) drehbar ist, die ein Schwingungszentrum auf der Achse (Oz) des Rotors hat, die mit dem Drehzentrum der drehenden Scheibe vereinigt ist und das Zentrum dieser Taumelscheiben-Einheit bestimmt, wobei die erste Einheit (16) in allen Richtungen um ihr Zentrum (O') unter Einwirkung von wenigstens zwei zwischen einem nicht drehenden Aufbau (31) des Luftfahrzeugs und der ersten Einheit (16) eingefügten Betätigungswirkgliedern (26, 28) schrägstellbar ist, indem sie jeweils an der nicht drehenden Scheibe (20) gelenkig angebracht sind, die durch Verbindungsmittel (49) am genannten nicht drehenden Aufbau (31) gehalten ist, während die drehende Scheibe (18) durch Mittel (39) zur Verbindung mit dem Rotor um die Achse (Oz) des Rotors drehangetrieben wird und mit jedem von wenigstens zwei Blättern (13, 14) des Rotors durch eine jeweilige Anstellungsstange (22, 23) verbunden ist, wobei die Vorrichtung zumindest so viele Betätigungswirkglieder (26, 27, 28, 29) enthält, wie der Rotor Blätter (11, 12, 13, 14) aufweist, und alle Wirkglieder nicht drehend sind, **dadurch gekennzeichnet, dass** sie wenigstens eine zweite Taumelscheiben-Einheit (17) umfasst, deren Zentrum (O) auch auf der Achse (Oz) des Rotors liegt, wobei die zweite Einheit (17) in allen Richtungen um ihr Zentrum (O) unter Einwirkung wenigstens eines weiteren Betätigungswirkgliedes (29) schrägstellbar ist, das zwischen einem nicht drehenden Aufbau (31, 20) und der zweiten Einheit (17) eingefügt ist, deren nicht drehende Scheibe (21) am genannten anderen Betätigungswirkglied (29) gelenkig angebracht ist und durch Verbindungsmittel (49-32) an einem nicht drehenden Aufbau (31, 20) gehalten wird, während die drehende Scheibe (19) der zweiten Einheit (17) auch durch die Mittel (39) zur Verbindung mit dem Rotor um die Achse (Oz) dieses letzteren drehangetrieben wird und mit jedem von zumindest einem weiteren Blatt (11, 12) des Rotors durch eine jeweilige Anstellungsstange (24, 25) verbunden ist.

2. Vorrichtung nach Anspruch 1 für einen Vierblatt-Rotor, dessen Blätter als zwei Paar Blätter (11, 12 - 13, 14) bezüglich der Achse (Oz) des Rotors sich diametral gegenüberliegend gruppiert sind, **dadurch gekennzeichnet, dass** die Anstellungsstangen (22, 23) von zwei sich diametral gegenüberliegenden Blättern (13, 14) an der drehenden Scheibe (18) der ersten Taumelscheiben-Einheit (16) gelenkig angebracht (38) sind, deren Zentrum entlang der Achse (Oz) des Rotors längsverschiebbar ist und deren nicht drehende Scheibe (20) an drei Betätigungswirkgliedern (26, 27, 28) gelenkig angebracht ist, die die Längsbewegungen und Schrägstellungen der ersten Taumelscheiben-Einheit (16) steuern, wobei die Stangen (24, 25) der beiden anderen sich diametral gegenüberliegenden Blätter (11, 12) an der drehenden Scheibe (19) der zweiten Taumelscheiben-Einheit (17) gelenkig angebracht (37) sind, deren Zentrum bezüglich demjenigen der ersten Taumelscheiben-Einheit axial versetzt und entlang der Achse (Oz) des Rotors längsverschiebbar ist und deren nicht drehende Scheibe (21) an einem vierten Betätigungswirkglied (29) gelenkig angebracht und mit der nicht drehenden Scheibe (20) der ersten Taumelscheiben-Einheit (16) durch zwei starre Stäbe (32) von konstanter Länge verbunden ist, die jeweils an die nicht drehende Scheibe (21) der zweiten Einheit (17) die Verschiebungen überträgt, die an die nicht drehende Scheibe (20) der ersten Einheit (16) durch das eine bzw. das andere der beiden an dieser letzteren gelenkig angebrachten Betätigungswirkglieder (26, 27) übertragen werden.

3. Vorrichtung nach Anspruch 2, **dadurch gekennzeichnet, dass** die beiden starren Stäbe (32) Verbindungsmittel bilden, die sich der Rotation der nicht drehenden Scheibe (21) der zweiten Taumelscheiben-Einheit (17) entgegenstellen.

4. Vorrichtung nach Anspruch 1 für einen Vierblatt-Rotor, **dadurch gekennzeichnet, dass** an der drehenden Scheibe (68, 69) jeder der beiden Taumelscheiben-Einheiten (66, 67) jeweils zwei Anstellungsstangen (72, 73 - 74, 75) von den einen bzw. anderen zwei sich nicht diametral gegenüberliegenden Blättern gelenkig angebracht sind, während die nicht drehende Scheibe (70, 71) jeder der beiden Taumelscheiben-Einheiten (66, 67) an den einen bzw. den anderen zwei sich nicht diametral gegenüberliegenden Betätigungswirkgliedern (76, 77 - 78, 79) gelenkig angebracht (30) ist, die einzig und allein die Schrägstellungen der entsprechenden nicht drehenden Scheibe (70, 71) um das entsprechende Schwingungszentrum steuert, wobei die Zentren der beiden Taumelscheiben-Einheiten sich nicht auf der Achse (Oz) in Bezug auf den nicht drehenden Aufbau (31) längsverschieben.

5. Vorrichtung nach Anspruch 1 für einen Rotor, dessen Anzahl b von Blättern gleich 3n + 1 ist, wobei n eine ganze Zahl ist, die größer oder gleich 1 ist, **dadurch gekennzeichnet, dass** sie eine Anzahl (n-1) von Taumelscheiben-Einheiten (86), bei denen jedes Zentrum entlang der Achse (Oz) des Rotors längsverschiebbar ist und deren drehende Scheibe (88) bei jeder von ihnen an drei jeweiligen Anstellungsstangen (92, 93, 94) der Blätter gelenkig angebracht ist und deren nicht drehende Scheibe (90) bei jeder von ihnen an drei jeweiligen Betätigungswirkgliedern (96, 97, 98) gelenkig angebracht und durch diese verschoben wird, sowie zwei weitere Taumelscheiben-Einheiten (wie z.B. 87) umfasst, wobei die drehende Scheibe (89) jeder dieser beiden weiteren Einheiten an zwei jeweiligen Anstellungsstangen (103, 104) von zwei sich nicht diametral gegenüberliegenden Blättern gelenkig angebracht ist und die nicht drehende Scheibe (91) jeder dieser beiden weiteren Einheiten an zwei jeweiligen, sich nicht diametral gegenüberliegenden Betätigungswirkgliedern (100, 101) gelenkig angebracht ist, die einzig und allein die Schrägstellungen der entsprechenden nicht drehenden Scheibe (91) um das entsprechende Schwingungszentrum steuern.

6. Vorrichtung nach Anspruch 1 für einen Rotor, dessen Anzahl b von Blättern gleich 3n + 2 ist, wobei n eine ganze Zahl ist, die größer oder gleich 1 ist, **dadurch gekennzeichnet, dass** sie eine Anzahl n von Taumelscheiben-Einheiten (86), bei denen jedes Zentrum entlang der Achse (Oz) des Rotors längsverschiebbar ist und deren drehende Scheibe (88) bei jeder von ihnen an drei jeweiligen Anstellungsstangen (92, 93, 94) der Blätter gelenkig angebracht ist und deren nicht drehende Scheibe (90) bei jeder von ihnen an drei jeweiligen Betätigungswirkgliedern (96, 97, 98) gelenkig angebracht und durch diese verschoben wird, sowie eine weitere Taumelscheiben-Einheit (87) umfasst, deren drehende Scheibe (89) an zwei jeweiligen Anstellungsstangen (103, 104) von zwei sich nicht diametral gegenüberliegenden Blättern gelenkig angebracht ist und deren nicht drehende Scheibe (91) an zwei jeweiligen, sich nicht diametral gegenüberliegenden Betätigungswirkgliedern (100, 101) gelenkig angebracht ist, die einzig und allein die Schrägstellungen der weiteren Einheit (87) um das entsprechende Schwingungszentrum steuern.

7. Vorrichtung nach Anspruch 1 für einen Rotor, dessen Anzahl b von Blättern ein Vielfaches 3n von 3 ist, wobei n eine ganze Zahl ist, die größer oder gleich 2 ist, **dadurch gekennzeichnet, dass** sie eine Anzahl n von Taumelscheiben-Einheiten (106, 107) umfasst, bei denen jedes Zentrum entlang der Achse (Oz) des Rotors längsverschiebbar ist und deren drehende Scheibe (108, 109) bei jeder von ihnen an drei jeweiligen Anstellungsstangen (120, 121, 122 - 123, 124, 125) der Blätter gelenkig angebracht ist und deren nicht drehende Scheibe (110, 111) bei jeder von ihnen an drei jeweiligen Betätigungswirkgliedern (112, 113, 114 - 115, 116, 117) gelenkig angebracht ist und durch diese verschoben wird.

8. Vorrichtung nach einem der Ansprüche 1 bis 7, **dadurch gekennzeichnet, dass** jedes Betätigungswirkglied (76, 77, 78, 79) auch an einer nicht drehenden Sicherheitsscheibe (128) gelenkig angebracht ist, die zwischen den Taumelscheiben-Einheiten (66, 67) und dem festen Aufbau (31) des Luftfahrzeugs eingefügt ist, mit dem die Sicherheitsscheibe (128) durch Antirotationsmittel (129) verbunden ist, wobei die Sicherheitsscheibe (128) entlang der Achse (Oz) des Rotors längsverschiebbar und in allen Richtungen um ihr Zentrum (130) unter Einwirkung von Positionssteuermitteln (131, 132, 133) schrägstellbar ist, die zwischen der Sicherheitsscheibe (128) und dem festen Aufbau (31) eingefügt sind und vorzugsweise drei Sicherheitswirkglieder umfassen, die einerseits an der Sicherheitsscheibe (128) und andererseits am genannten festen Aufbau (31) gelenkig angebracht (30) sind.

9. Vorrichtung nach Anspruch 8, **dadurch gekennzeichnet, dass** sie überdies Verriegelungsmittel (145, 146) der individuellen Anstellungssteuerung jedes Blattes umfasst, wobei die Verriegelungsmittel durch die Betätigungswirkglieder (76) getragen werden und eine monozyklische Steuerung der Blätter durch die Steuerung der Längsverschiebungen und Schrägstellungen der Sicherheitsscheibe (128) ermöglichen.

10. Vorrichtung nach Anspruch 9, **dadurch gekennzeichnet, dass** die Verriegelungsmittel für jedes Betätigungswirkglied (76) eine Vorrichtung (145, 146, 154, 155) zur Verriegelung des Betätigungswirkgliedes (76) in neutraler Position umfassen.

11. Vorrichtung nach Anspruch 10, **dadurch gekennzeichnet, dass** jede Vorrichtung zur Verriegelung zwei Zahnstangen (154, 155) umfasst, von denen jede zum Sperren des entsprechenden Betätigungswirkgliedes (76) in der einen bzw. in der anderen der beiden Betätigungsrichtungen des Wirkgliedes (76) bestimmt ist.

12. Vorrichtung nach einem der Ansprüche 8 bis 11, **dadurch gekennzeichnet, dass** die Sicherheitsscheibe (128) an einem zentralen Kugelkopf (130) schrägstellbar ist, der axial verschieblich um den Rotormast (10) oder eine den Rotormast (10) umgreifende Muffe (135, 135) angebracht ist.

13. Vorrichtung nach Anspruch 12, die so beschaffen ist, dass bei wenigstens einer der Taumelscheiben-Einheiten (66, 67) deren nicht drehende Scheibe (70, 71) einzig und allein durch zwei entsprechende Betätigungswirkglieder (76, 77 - 78, 79) um das entsprechende Schwingungszentrum auf der Achse des Rotors schräggestellt wird, **dadurch gekennzeichnet, dass** das Schwingungszentrum auf einer Muffe (135) bestimmt ist, die um einen Rotormast (10) axial verschieblich angebracht ist und den zentralen Kugelkopf (130) der Sicherheitsscheibe (128) trägt.

14. Vorrichtung nach einem der Ansprüche 8 bis 13, deren drehende Scheiben (68, 69) von zwei benachbarten Taumelscheiben-Einheiten (66, 67) unterschiedliche Durchmesser haben, **dadurch gekennzeichnet, dass** wenigstens ein nicht drehender Mechanismus mit gelenkig angebrachten Hebeln (136, 139) zwischen einem Betätigungswirkglied (76', 77') der nicht drehenden Scheibe (70) von einer (66) der beiden Einheiten (66, 67) und der nicht drehenden Scheibe (70) eingesetzt ist, so dass der einen (66) der beiden Einheiten eine Schrägstellung gegeben wird, die verschieden von derjenigen der Sicherheitsscheibe (128) ist, um die Durchmesserunterschiede zwischen den drehenden Scheiben (68, 69) auszugleichen.

15. Vorrichtung nach Anspruch 14, die so beschaffen ist, dass sie mit Anspruch 12 oder 13 in Verbindung steht, **dadurch gekennzeichnet, dass** der Mechanismus mit gelenkig angebrachten Hebeln (136, 139) an einem feststehenden Punkt (137) der axial um den Rotormast (10) verschieblichen Muffe (135) gelenkig angebracht ist.

16. Vorrichtung nach einem der Ansprüche 1 bis 15, **dadurch gekennzeichnet, dass** die drehenden Scheiben (18,

# EP 0 870 676 B1

19) von Taumelscheiben-Einheiten (16, 17) entlang der Achse (Oz) des Rotors alle drehbar innerhalb der jeweiligen nicht drehenden Scheiben (20, 21) angebracht sind und dass wenigstens eine Anstellungsstange (22, 23) eine Öffnung durchläuft, die in jeder drehenden Scheibe (19) der Taumelscheiben-Einheiten (17) vorgesehen ist, die zwischen der drehenden Scheibe (18), an der die Stange (22, 23) gelenkig angebracht ist, und den Blättern angeordnet sind, welche die drehende Scheibe (18) steuert.

**17.** Vorrichtung nach einem der Ansprüche 1 bis 15, **dadurch gekennzeichnet, dass** die drehende Scheibe (18"), die zu einer (16") von zwei entlang der Achse (Oz) des Rotors benachbarten Taumelscheiben-Einheiten (16", 17) gehört und zwischen der anderen Taumel Scheiben-Einheit (17) und dem festen Aufbau (31) des Luftfahrzeugs eingefügt ist, drehbar um die entsprechende nicht drehende Scheibe (20") angebracht ist, wogegen die drehende Scheibe (19) der anderen Taumelscheiben-Einheit (17) innerhalb der entsprechenden nicht drehenden Scheibe (21) drehbar angebracht ist, und dass die Anstellungsstangen (22, 23), die an der drehenden Scheibe (18") von derjenigen der Taumelscheiben-Einheiten gelenkig angebracht (38) sind, die zwischen der anderen Einheit (17) und dem Aufbau (31) des Luftfahrzeugs axial eingefügt ist, Öffnungen in der drehenden Scheibe (19) der anderen Einheit (17) durchlaufen.

**18.** Vorrichtung nach einem der Ansprüche 1 bis 15, **dadurch gekennzeichnet, dass** die drehenden Scheiben (18', 19') von Taumelscheiben-Einheiten (16', 17') entlang der Achse (Oz) des Rotors alle außerhalb der jeweiligen nicht drehenden Scheiben (20', 21') angebracht sind und dass wenigstens ein Wirkglied (29') eine Öffnung (20'a) durchläuft, die in jeder nicht drehenden Scheibe (20') der Taumelscheiben-Einheiten (16') vorgesehen ist, die zwischen der nicht drehenden Scheibe (21'), an welcher das genannte Wirkglied (29') gelenkig angebracht ist, und einem nicht drehenden Aufbau (31) vorgesehen ist.

**19.** Vorrichtung nach einem der Ansprüche 1 bis 18, **dadurch gekennzeichnet, dass** wenigstens eine der Anstellungsstangen (22, 23) nicht geradlinig ist und an der entsprechenden drehenden Scheibe (18) durch Gelenkmittel (38) gelenkig angebracht ist, welche die Rotation der genannten Stange (22, 23) um eine Achse unterbinden, die senkrecht zur drehenden Scheibe (18) verläuft, wie z.B. Kardan-Gelenkmittel.

**20.** Vorrichtung nach einem der Ansprüche 1 bis 19, **dadurch gekennzeichnet, dass** die nicht drehenden Scheiben (20', 21') von zwei entlang der Achse des Rotors benachbarten Taumelscheiben-Einheiten (16, 17 - 16', 17') miteinander und mit dem festen Aufbau (31) des Luftfahrzeugs durch wenigstens einen gelenkig angebrachten Antirotationsdoppelzirkel (49-55) verbunden sind und/oder deren drehende Scheiben (18, 19) miteinander und mit dem Rotor durch wenigstens einen gelenkig angebrachten Drehantriebsdoppelzirkel (39) verbunden sind.

**Claims**

**1.** Device for the individual control of the blades of a rotor with at least four blades (11, 12, 13, 14) for a rotary wing structure of an aircraft, comprising a first set (16) of swashplates, which is a set of swashplates comprising a rotating plate (18) having a centre of rotation on an axis of rotation (Oz) of the rotor and rotating on a non-rotating plate (20) having a centre of pivoting on the axis (Oz) of the rotor coincident with a centre of rotation of the rotating plate and defining the centre of said set of swashplates, said first set (16) being inclinable in all directions about its centre (O') under the action of at least two operating actuators (26, 28) inserted between a non-rotating structure (31) of the aircraft and said first set (16), each being articulated to the non-rotating plate (20), held by connecting means (49) to said non-rotating structure (31), while the rotating plate (18) is rotated by means (39) of connection to the rotor about the axis (Oz) of the rotor, and is connected to each of at least two blades (13, 14) of the rotor by a respective pitch rod (22, 23), the device comprising at least as many operating actuators (26, 27, 28, 29) as the rotor has blades (11, 12, 13, 14), and all the actuators being non-rotating, **characterized in that** it comprises at least a second set (17) of swashplates, having a centre (O) also lying on the axis (Oz) of the rotor, said second set (17) being inclinable in all directions about its centre (O) under the action of at least one other operating actuator (29) inserted between a non-rotating structure (31, 20) and said second set (17), the non-rotating plate (21) of which is articulated to said other actuator (29) and is held by connecting means (49-32) to a non-rotating structure (31, 20), while the rotating plate (19) of said second set (17) is also rotated by means (39) of connection to the rotor, about the axis (Oz) of the latter, and is connected to each of at least one other blade (11, 12) of the rotor by a respective pitch rod (24, 25).

**2.** Device according to Claim 1, for a four-bladed rotor, in which the blades are grouped in two pairs of blades (11,12 - 13,14) which are diametrically opposed with respect to the axis (Oz) of the rotor, **characterized in that** the pitch rods (22, 23) of two diametrically opposed blades (13, 14) are articulated (38) to the rotating plate (18) of the first set (16) of swashplates, the centre of which can be translated along the axis (Oz) of the rotor, and the non-rotating plate (20) of which is articulated to three operating actuators (26, 27, 28) controlling the translations and inclinations of said first set (16) of swashplates, the rods (24, 25) of the other two diametrically opposed blades (11, 12) being articulated (37) to the rotating plate (19) of the second set (17) of swashplates, the centre of which is axially offset with respect to that of the first set of swashplates, and can be translated along the axis (Oz) of the rotor, and the non-rotating plate (21) of which is articulated (30) to a fourth operating actuator (29) and connected to the non-rotating plate (20) of the first set (16) of swashplates by two rigid bars (32) of constant length, each transmitting to the non-rotating plate (21) of said second set (17), the movement transmitted to the non-rotating plate (20) of said first set (16) by each one respectively of the two actuators (26, 27) articulated to the latter plate.

3. Device according to Claim 2, **characterized in that** the two rigid bars (32) constitute connecting means which oppose the rotation of the non-rotating plate (21) of the second set (17) of swashplates.

4. Device according to Claim 1, for a four-bladed rotor, **characterized in that**, to the rotating plate (68, 69) of each of two sets (66, 67) of swashplates are articulated respectively two pitch rods (72,73 - 74,75) of two nondiametrically opposed blades, while the non-rotating plate (70, 71) of each of the two sets (66, 67) of swashplates is articulated (30) to two respective nondiametrically opposed operating actuators (76,77 - 78,79) controlling only the inclinations of the corresponding non-rotating plate (70, 71) about the corresponding centre of pivoting, the centres of the two sets of swashplates not being translated along the axis (Oz) with respect to the non-rotating structure (31).

5. Device according to Claim 1, for a rotor in which the number b of blades is equal to 3n + 1, where n is a whole number greater than or equal to 1, **characterized in that** it comprises a number (n-1) of sets (86) of swashplates, each centre of which can be translated along the axis (Oz) of the rotor, and the rotating plate (88) of each of which is articulated to three respective pitch rods (92, 93, 94) for the blades, and the non-rotating plate (90) of each of which is articulated to and moved by three respective operating actuators (96, 97, 98), and two other sets of swashplates (such as 87), the rotating plate (89) of each of said other two sets being articulated to two respective pitch rods (103, 104) for two nondiametrically opposed blades, and the non-rotating plate (91) of each of said other two sets being articulated to two respective nondiametrically opposed operating actuators (100, 101) controlling only the inclinations of the corresponding non-rotating plate (91) about the corresponding centre of pivoting.

6. Device according to Claim 1, for a rotor in which the number b of blades is equal to 3n + 2, where n is a whole number greater than or equal to 1, **characterized in that** it comprises a number n of sets (86) of swashplates, each centre of which can be translated along the axis (Oz) of the rotor, and the rotating plate (88) of each of which is articulated to three respective pitch rods (92, 93, 94) for the blades, and the non-rotating plate (90) of each of which is articulated to and moved by three respective operating actuators (96, 97, 98), and another set (87) of swashplates, the rotating plate (89) of which is articulated to two respective pitch rods (103, 104) for two nondiametrically opposed blades, and the non-rotating plate (91) of which is articulated to two respective nondiametrically opposed operating actuators (100, 101) controlling only the inclinations of said other set (87) about the corresponding centre of pivoting.

7. Device according to Claim 1, for a rotor in which the number b of blades is a multiple 3n of 3, n being a whole number greater than or equal to 2, **characterized in that** it comprises a number n of sets (106, 107) of swashplates, each centre of which can be translated along the axis (Oz) of the rotor, and the rotating plate (108, 109) of each of which is articulated to three respective pitch rods (120,121,122 - 123,124,125) for the blades, and the non-rotating plate (110, 111) of each of which is articulated to and moved by three respective operating actuators (112,113,114 - 115,116,117).

8. Device according to any one of Claims 1 to 7, **characterized in that** each operating actuator (76, 77, 78, 79) is also articulated to a non-rotating safety plate (128) inserted between the sets (66, 67) of swashplates and the stationary structure (31) of. the aircraft, to which the safety plate (128) is connected by anti-rotation means (129), the safety plate (128) being translatable along the axis (Oz) of the rotor and inclinable in all directions about its centre (130) under the action of position-control means (131, 132, 133) inserted between the safety plate (128) and the stationary structure (31), and preferably comprising three safety actuators, each articulated (30) on the one hand, to the safety plate (128), and on the other hand, to said stationary structure (31).

9. Device according to Claim 8, **characterized in that** it additionally comprises means (145, 146) for locking the individual pitch control for each blade, said locking means being borne by said operating actuators (76), and allowing monocyclic control of the blades by controlling the translations and inclinations of the safety plate (128).

10. Device according to Claim 9, **characterized in that** the locking means comprise, for each operating actuator (76), a device (145, 146, 154, 155) for locking said operating actuator (76) in a neutral position.

11. Device according to Claim 10, **characterized in that** each locking device comprises two racks (154, 155), each of which is intended to block the corresponding operating actuator (76) in one respectively of the two directions in which said actuator (76) can be operated.

12. Device according to any one of Claims 8 to 11, **characterized in that** the safety plate (128) can be inclined on a central ball joint (130) mounted so that it can slide axially about the rotor mast (10) or about a sleeve (35, 135) surrounding the rotor mast (10).

13. Device according to Claim 12, such that at least one of the sets (66, 67) of swashplates has its non-rotating plate (70, 71) only inclined by two corresponding operating actuators (76,77 - 78,79) about the corresponding centre of pivoting on the axis of the rotor, **characterized in that** said centre of pivoting is defined on a sleeve (135) mounted so that it can slide axially about the rotor mast (10), and bearing the central ball joint (130) of the safety plate (128).

14. Device according to any one of Claims 8 to 13, in which the rotating plates (68, 69) of two neighbouring sets (66, 67) of swashplates have different diameters, **characterized in that** at least one non-rotating mechanism with articulated levers (136, 139) is inserted between an operating actuator (76' 77') of the non-rotating plate (70) of one (66) of the two sets (66, 67) and said non-rotating plate (70) so as to give to one (66) of the two sets an inclination which differs from that of the safety plate (128), so as to compensate for the differences in diameter between the rotating plates (68, 69).

15. Device according to Claim 14, as attached to Claim 12 or 13, **characterized in that** the mechanism with articulated levers (136, 139) is articulated to a stationary point (137) of the sleeve (135) sliding axially about the rotor mast (10).

16. Device according to any one of Claims 1 to 15, **characterized in that** the rotating plates (18, 19) of sets (16, 17) of swashplates are all mounted, along the axis (Oz) of the rotor, such that they rotate on the inside of the respective non-rotating plates (20, 21), and at least one pitch rod (22, 23) passes through an aperture made in each rotating plate (19) of the sets (17) of swashplates inserted between the rotating plate (18) to which said rod (22, 23) is articulated and the blades that said rotating plate (18) controls.

17. Device according to any one of Claims 1 to 15, **characterized in that** the rotating plate (18'') of one (16'') of two neighbouring sets (16'', 17) of swashplates along the axis (Oz) of the rotor and inserted between the other set (17) of swashplates and the stationary structure (31) of the aircraft, is mounted so that it can rotate about the corresponding non-rotating plate (20''), whereas the rotating plate (19) of said other set (17) of swashplates is mounted so that it can rotate on the inside of the corresponding non-rotating plate (21), and pitch rods (22, 23), articulated (38) to the rotating plate (18'') of that one (16'') of the sets of swashplates which is inserted axially between the other set (17) and the structure (31) of the aircraft, pass through apertures in the rotating plate (19) of the other set (17).

18. Device according to any one of Claims 1 to 15, **characterized in that** the rotating plates (18', 19') of sets (16', 17') of swashplates are all mounted, along the axis (Oz) of the rotor, such that they rotate on the outside of the respective non-rotating plates (20', 21'), and at least one actuator (29') passes through an aperture (20'a) made in each non-rotating plate (20') of the sets (16') of swashplates inserted between the non-rotating plate (21') to which said actuator (29') is articulated and a non-rotating structure (31).

19. Device according to any one of Claims 1 to 18, **characterized in that** at least one of the pitch rods (22, 23) is not straight and is articulated to the corresponding rotating plate (18) by articulation means (38) which prevent said rod (22, 23) from rotating about an axis perpendicular to said rotating plate (18), such as articulation means using cardan joints.

20. Device-according to any one of Claims 1 to 19, **characterized in that** two neighbouring sets (16,17 - 16',17') of swashplates along the axis of the rotor have their non-rotating plates (20', 21') connected to one another and to the stationary structure (31) of the aircraft by at least one anti-rotation articulated double scissors (49-55) and/or have their rotating plates (18, 19) connected to one another and to the rotor by at least one rotational-drive articulated double scissors (39).

# FIG.1.

# FIG.2.

# FIG.3.

EP 0 870 676 B1

# FIG.4.

FIG.5.

10

18b

34

36

18c

18b

35

FIG.6.

z

10

60

58

59

19'c

19'

57

34'

58

60

59

35

0

# FIG.7.

FIG.8.

FIG.8a.

FIG.9.

# FIG.10.

EP 0 870 676 B1

# FIG.11.

# FIG.12 .

# FIG.13.

# FIG.14.

FIG.15.

FIG.17.

FIG.16.

FIG.18.

FIG.19.